# EUROPEAN PATENT APPLICATION

(11) **EP 4 692 237 A1**
(43) Date of publication of application: **11.02.2026**
(21) Application number: 24779300.3
(22) Date of filing: 08.03.2024
(51) Int. Cl.: C08L 77/00, B32B 27/32, B65D 65/40, C08K 5/20, C08L 23/00, C08L 23/26

(54) **POLYAMIDE RESIN COMPOSITION, FILM AND FILM LAMINATE COMPRISING SAME, AND PELLET MIXTURE**

(30) Priority: 31.03.2023 JP 2023058329
(71) Applicant: UBE Corporation, Ube-shi, Yamaguchi 755-8633 (JP)
(72) Inventor: FUJINO, Hiroshi, Ube-shi, Yamaguchi 755-8633 (JP); ONO, Keitarou, Ube-shi, Yamaguchi 755-8633 (JP); HANAOKA, Yasunari, Ube-shi, Yamaguchi 755-8633 (JP); YAMASHITA, Atsushi, Ube-shi, Yamaguchi 755-8633 (JP)
(74) Representative: Hoffmann Eitle
(86) International application number: PCT/JP2024/009054
(87) International publication number: WO 2024/203169

(57) **Abstract**

There are provided a polyamide resin composition that provides a film which is free from appearance deterioration due to film gels, and exhibits excellent transparency, mechanical strength and pinhole resistance, and whose material recycling is possible, as well as a film and film laminate using the same.

The polyamide resin composition containing 88 to 99 mass% of an aliphatic polyamide resin (A), 1 to 5 mass% of a functional group-containing copolymer (B) of ethylene and an α-olefin having 3 to 8 carbon atoms, and 0 to 9 mass% of other components (C) based on 100 mass% of the polyamide resin composition. In the component (A), a ratio of the number of methylene groups to the number of amide groups is 3 to 11, and the component (A) (100 mass%) contains 1 to 50 mass% of an aliphatic homopolyamide (A-1) and 50 to 99 mass% of an aliphatic copolymer polyamide (A-2). A DSC curve of the resin composition has a melting peak at 150 to 205°C. A number average molecular weight Mn of the resin composition is 50,000 to 60,000. When the polyamide resin composition of the present invention or the film using the same is recycled, it is possible to contribute to achievements of Goals 13 and 14 of the Sustainable Development Goals (SDGs).

## Description

### Technical Field

The present invention relates to a polyamide resin composition, a film and film laminate containing the same, and a pellet mixture.

### Background Art

In recent years, there has been a demand for plastic waste recycling due to issues such as global warming and marine pollution. Packaging materials for food packaging, etc. are often laminates made of different resins such as polyamides and polyolefins, in order to impart functions. When considering recycling of such waste, separation by peeling off layers is conceivable, but this is technically difficult and unrealistic. On the other hand, when laminates are directly subjected to material recycling without peeling off, since different resins have poor compatibility, physical properties of the recycled mixed resin significantly deteriorate, and its applications are very limited. In order to mix different resins well, it is conceivable to use a compatibilizer. Modified ethylene/α-olefin copolymers are known as compatibilizers for polyamides and polyolefins.

In addition, it is necessary for polyamide resin compositions to have improved material recyclability while maintaining physical properties of the film obtained from the composition before recycling. For packaging materials for food packaging, etc., polyamide resin compositions are required to exhibit high transparency, tensile strength, puncture strength and pinhole resistance, and a low amount of film gels. In addition, flexibility and elasticity are also required depending on applications, and it is known to use aliphatic copolymer polyamides in order to impart flexibility and elasticity to polyamide films.

Patent Literature 1 discloses a multilayer structure including a polar layer containing nylon and a polyolefin layer, wherein the polyolefin layer contains a compatibilizer component containing an anhydride and/or carboxylic acid functionalized ethylene/α-olefin interpolymer having a specific melt viscosity and density, and indicates that waste of the multilayer structure can be recycled.

Patent Literature 2 discloses a laminate with improved recyclability and having a layer structure including a sealant layer and a reinforcing layer, wherein the sealant layer contains linear low-density polyethylene and a compatibilizer which is an unsaturated carboxylic acid modified polyolefin, and the reinforcing layer contains a polyamide resin.

Patent Literature 3 discloses a polyamide resin composition containing 100 parts by mass of a polyamide (A) and 3 to 30 parts by mass of an acid-modified polyethylene (E) having a density of 0.915 to 0.975 g/cm³, and indicates that the composition exhibits excellent heat aging resistance and is suitable for automotive parts.

Patent Literature 4 discloses a polyamide resin formulation obtained by mixing (A) a masterbatch obtained by melting and mixing (a) a polyamide resin and a modified ethylene/α-olefin copolymer at a ratio of 40/60 to 99/1 (weight ratio), and (B) a polyamide resin at a ratio of 1/99 to 60/40 (weight ratio), and indicates that a polyamide film molded from the formulation exhibits excellent pinhole resistance and transparency, and few fisheyes.

In examples of Patent Literatures 3 and 4, only polyamide 6 is used as the polyamide resin.

Patent Literature 5 discloses a polyamide resin composition containing (A) a linear aliphatic nylon copolymer having a melting point of 130°C or lower and (B) a modified polyolefin resin at a predetermined ratio, and indicates that a nylon laminate having excellent thermal adhesiveness can be obtained by inexpensive coextrusion molding with a simple process.

Patent Literature 6 discloses a polyamide resin composition containing (A) a polyamide resin containing an aliphatic homopolyamide and a copolymer polyamide and (B) an impact-resistant material such as a maleic anhydride modified ethylene-butene copolymer at a predetermined ratio, wherein the composition has excellent blow moldability while maintaining a favorable surface appearance of a molded article.

Patent Literature 7 discloses a hydrogen tank liner material formed of a polyamide resin composition containing (A) polyamide 6, (B) a copolymer polyamide and (C) an impact-resistant material at a predetermined ratio, and indicates that the material exhibits an excellent gas barrier property and impact resistance at a very low temperature.

Patent Literature 8 discloses a polyamide resin composition containing a polyamide resin and a modified polyolefin resin at a predetermined ratio, and indicates that the composition exhibits excellent heat resistance and is suitable for producing a blow molded product.

In addition, Patent Literature 9 discloses a pelletizable thermoplastic polymer composition containing (a) a polyamide and (b) a polymer polymerized from maleic anhydride and an olefin, and indicates that a product having improved durability and the like can be obtained.

Patent Literature 10 discloses a masterbatch composition which contains an olefin-maleic anhydride copolymer and one or more types of carrier resins, and which is used to prepare a polyamide formulation from a polyamide, and indicates that the masterbatch composition has favorable compatibility and does not undergo phase separation.

### Citation List

### Patent Literature

Patent Literature 1: JP 2018-502743 A
Patent Literature 2: JP 2020-11415 A
Patent Literature 3: JP 2019-38938 A
Patent Literature 4: JP 2000-109685 A
Patent Literature 5: JP H07-3109 A
Patent Literature 6: JP 2017-206639 A
Patent Literature 7: JP 2009-191871 A
Patent Literature 8: JP H04-239559 A
Patent Literature 9: JP 2014-503003 A
Patent Literature 10: JP 2015-525813 A

### Summary of Invention

### Technical Problem

Incorporation of a compatibilizer into a laminate is thought to improve recyclability of laminate waste. Patent Literatures 1 and 2 only disclose incorporation of a compatibilizer into the polyolefin layer, and do not disclose incorporation of a compatibilizer into the polyamide layer. Generally, when a compatibilizer such as a modified polyolefin was incorporated into a polyamide, problems such as the generation of film gels and a decrease in transparency occurred.

The polyamide resin compositions of Patent Literatures 3 to 10 contain a polyamide resin and a modified polyolefin resin at a predetermined ratio, but these compositions are intended to improve properties such as heat aging resistance, transparency, moldability, impact resistance, and thermal adhesiveness, and do not take recyclability of waste of the obtained molded article into consideration, and therefore had insufficient recyclability.

In addition, the polyamide resin compositions of Patent Literatures 3, 5, 7 and 8 are intended for applications such as automotive parts; and laminates with non-woven fabrics, woven fabrics and the like, and it was difficult to apply them to packaging materials for food packaging, etc., where the generation of film gels, a decrease in transparency and the like are problematic. The film obtained from the polyamide resin formulation of Patent Literature 4 exhibited certain levels of pinhole resistance, transparency, and reduction in the amount of film gels, but the levels were insufficient. The films obtained from the compositions of Patent Literatures 6, 9 and 10 exhibited insufficient physical properties such as film gels.

The present invention provides a polyamide resin composition that provides a film which is free from appearance deterioration due to film gels, and exhibits excellent transparency, mechanical strength and pinhole resistance, and that enables material recycling of a laminate of the film and a different resin film, as well as a film and film laminate using the same. The present invention also provides a pellet mixture that is suitably used for producing the polyamide resin composition, film and film laminate.

### Solution to Problem

The present invention relates to the following [1] to [19].
[1] A polyamide resin composition comprising 88 to 99 mass% of an aliphatic polyamide resin (A), 1 to 5 mass% of a functional group-containing copolymer (B) of ethylene and an α-olefin having 3 to 8 carbon atoms, and 0 to 9 mass% of other components (C) based on 100 mass% of the polyamide resin composition; wherein, in the aliphatic polyamide resin (A), a ratio of the number of methylene groups to the number of amide groups is 3 or more and 11 or less; the aliphatic polyamide resin (A) comprises 1 to 50 mass% of an aliphatic homopolyamide (A-1) and 50 to 99 mass% of an aliphatic copolymer polyamide (A-2) based on 100 mass% of the aliphatic polyamide resin (A); when the polyamide resin composition is heated from 0°C to 280°C at a rate of 20°C/min in an air atmosphere, a DSC curve has a melting peak in a range of 150°C to 205°C, and a number average molecular weight Mn of the polyamide resin composition measured by GPC is 50,000 to 60,000.
[2] The polyamide resin composition according to [1], wherein the DSC curve further has a melting peak in a range of 70°C to 120°C.
[3] The polyamide resin composition according to [1] or [2], wherein the aliphatic copolymer polyamide (A-2) is a copolymer selected from the group consisting of polyamide 6/66, polyamide 6/69, polyamide 6/11, polyamide 6/12, polyamide 6/66/11 and polyamide 6/66/12.
[4] The polyamide resin composition according to any one of [1] to [3], wherein the copolymer (B) is an ethylene/propylene copolymer, ethylene/1-butene copolymer, ethylene/1-hexene copolymer or ethylene/1-octene copolymer, each of which has a group derived from maleic anhydride.
[5] The polyamide resin composition according to any one of [1] to [4], wherein the other components (C) comprise a polyolefin (D) having no functional group, and the content of the component (D) based on 100 mass% of the polyamide resin composition is 2 to 8 mass%.
[6] The polyamide resin composition according to any one of [1] to [5], wherein the other components (C) comprise an antioxidant, and the content of the antioxidant based on 100 mass% of the polyamide resin composition is 0.01 to 1 mass%.
[7] The polyamide resin composition according to any one of [1] to [6], wherein the other components (C) comprise a compound (E), which is at least one selected from the group consisting of methylenebis(stearamide), ethylenebis(stearamide), butylenebis(stearamide) and hexamethylenebis(stearamide), and the content of the compound (E) based on 100 mass% of the polyamide resin composition is 0.01 to 1 mass%.
[8] The polyamide resin composition according to any one of [1] to [7], wherein the other components (C) comprise a compound (F), which is at least one selected from the group consisting of terminal-modified polyalkylene glycols, phosphate esters or phosphite esters, higher fatty acid monoesters, higher fatty acids, metal salts of higher fatty acids, higher fatty acid monoamides, N-substituted higher fatty acid monoamides, magnesium silicate and substituted benzylidene sorbitols, and the content of the compound (F) based on 100 mass% of the polyamide resin composition is 0.01 to 1 mass%.
[9] The polyamide resin composition according to any one of [1] to [8], which is substantially free of silica.
[10] A polyamide film comprising the polyamide resin composition according to any one of [1] to [9].
[11] A laminate film comprising at least three layers, laminated in the order of a layer containing the polyamide resin composition according to any one of [1] to [9], an adhesive layer, and a polyolefin layer.
[12] A laminate film comprising at least five layers, laminated in the order of an adhesive layer and a polyolefin layer on both sides of a layer containing the polyamide resin composition according to any one of [1] to [9].
[13] The laminate film according to [11] or [12], wherein the layer containing the polyamide resin composition is a biaxially stretched layer.
[14] The laminate film according to any one of [11] to [13], which is for food packaging.
[15] A pellet mixture comprising a first pellet containing a first aliphatic polyamide resin (a1) and a functional group-containing copolymer (B) of ethylene and an α-olefin having 3 to 8 carbon atoms; and a second pellet containing a second aliphatic polyamide resin (a2);
   wherein the first pellet comprises 60 to 90 mass% of the first aliphatic polyamide resin (a1), 10 to 40 mass% of the copolymer (B), and 0 to 9 mass% of other components (C) based on 100 mass% of the first pellet, and the aliphatic polyamide resin (a1) is an aliphatic homopolyamide; the second aliphatic polyamide resin (a2) comprises 0 to 20 mass% of an aliphatic homopolyamide and 80 to 100 mass% of an aliphatic copolymer polyamide based on 100 mass% of the aliphatic polyamide resin (a2); the content of the aliphatic homopolyamide is 1 to 50 mass%, and the content of the aliphatic copolymer polyamide is 50 to 99 mass% based on a total amount of 100 mass% of the first aliphatic polyamide resin (a1) and the second aliphatic polyamide resin (a2); in the aliphatic polyamide resin (a1) and the aliphatic polyamide resin (a2), a ratio of the number of methylene groups to the number of amide groups is 3 or more and 11 or less, respectively,
   a kneaded product obtained after the pellet mixture is melt-kneaded comprises a total amount of 88 to 99 mass% of the first aliphatic polyamide resin (a1) and the second aliphatic polyamide resin (a2), 1 to 5 mass% of the copolymer (B) and 0 to 9 mass% of the other components (C) based on 100 mass% of the kneaded product; when the kneaded product is heated from 0°C to 280°C at a rate of 20°C/min in an air atmosphere, a DSC curve has a melting peak in a range of 150°C to 205°C, and a number average molecular weight Mn of the kneaded product measured by GPC is 50,000 to 60,000.
[16] The pellet mixture according to [15], wherein a melting point of the copolymer (B) is 70 to 120°C.
[17] The pellet mixture according to [15] or [16], further comprising a third pellet containing a polyolefin (D) having no functional group, wherein the content of the component (D) based on 100 mass% of the melt-kneaded product is 2 to 8 mass%.
[18] The first pellet for use in production of the pellet mixture according to any one of [15] to [17], which is mixed with the second pellet.
[19] The second pellet for use in production of the pellet mixture according to any one of [15] to [17], which is mixed with the first pellet.

### Advantageous Effects of Invention

According to the present invention, it is possible to provide a polyamide resin composition that provides a film which is free from appearance deterioration due to film gels, and exhibits excellent transparency, mechanical strength and pinhole resistance, and that enables material recycling of a laminate of the film and a different resin film, as well as a film and film laminate using the same. In addition, it is possible to provide a pellet mixture that is suitably used for producing the polyamide resin composition, film and film laminate.

### Description of Embodiments

In this specification, unless otherwise specified, when there are a plurality of substances corresponding to components in the composition, the content of each component in the composition is a total amount of the plurality of substances. In this specification, the term "polyamide resin composition" refers to a composition containing at least a polyamide resin, and includes any form such as pellets, sheets, strands, chips, and molded products molded by various methods. The term "pellet" refers to one form that the polyamide resin composition can have. Hereinafter, a polyamide resin composition and pellets according to the present invention will be described in detail.

A polyamide resin composition of the present invention comprises 88 to 99 mass% of an aliphatic polyamide resin (A), 1 to 5 mass% of a functional group-containing copolymer (B) of ethylene and an α-olefin having 3 to 8 carbon atoms, and 0 to 9 mass% of other components (C) based on 100 mass% of the polyamide resin composition; wherein, in the aliphatic polyamide resin (A), a ratio of the number of methylene groups to the number of amide groups is 3 or more and 11 or less; the aliphatic polyamide resin (A) comprises 1 to 50 mass% of an aliphatic homopolyamide (A-1) and 50 to 99 mass% of an aliphatic copolymer polyamide (A-2) based on 100 mass% of the aliphatic polyamide resin (A); when the polyamide resin composition is heated from 0°C to 280°C at a rate of 20°C/min in an air atmosphere, a DSC curve has a melting peak in a range of 150°C to 205°C; and a number average molecular weight Mn of the polyamide resin composition measured by GPC is 50,000 to 60,000. When the polyamide resin composition of the present invention is used, it is possible to obtain a film which is free from appearance deterioration due to film gels, and exhibits excellent transparency, mechanical strength such as tensile strength, elongation and puncture strength, and pinhole resistance, and it is possible to make material recycling of waste of the film.

In the present invention, material recycling means reusing waste as a product raw material. Specifically, in the case of a laminate film including a layer containing a polyamide resin composition, particularly, a laminate film including a layer containing at least a polyamide resin composition and a layer containing a polyolefin, the material recycling means that the laminate film waste is subjected to processing such as cutting and crushing, then melt-kneaded, formed into pellets or the like and reused as a raw material for new plastic products.

### [Polyamide Resin Composition]

### <Aliphatic Polyamide Resin (A)>

The aliphatic polyamide resin (A) has an aliphatic group in the constituent repeating unit and has an amide bond (-CONH-) in the main chain.

Examples of aliphatic polyamide resins (A) include aliphatic homopolyamides and aliphatic copolymer polyamides, and these may be used alone or two or more thereof may be used in combination.

### (Aliphatic Homopolyamide (A-1))

The aliphatic homopolyamide (A-1) is a polyamide resin composed of one type of structural unit derived from an aliphatic monomer. The aliphatic homopolyamide (A-1) may be composed of at least one of one type of a lactam and an aminocarboxylic acid, which is a hydrolyzate of the lactam, or may be composed of a combination of one type of diamine and one type of dicarboxylic acid. Here, a combination of a diamine and a dicarboxylic acid, that is, a combination of one type of diamine and one type of dicarboxylic acid, is regarded as one type of monomer.

Examples of lactams include ε-caprolactam, enantholactam, undecanelactam, dodecanelactam (ω-laurolactam), α-pyrrolidone and α-piperidone. Among these, in consideration of polymerization productivity, one selected from the group consisting of ε-caprolactam, undecanelactam and dodecanelactam is preferable.

In addition, examples of aminocarboxylic acids include ε-aminocaproic acid, 7-aminoheptanoic acid, 9-aminononanoic acid, 11-aminoundecanoic acid and 12-aminododecanoic acid.

Examples of diamines include aliphatic diamines such as ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine, and 2,2,4/2,4,4-trimethylhexamethylenediamine.

Examples of dicarboxylic acids include aliphatic dicarboxylic acids such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, and eicosanedioic acid.

Specific examples of aliphatic homopolyamides (A-1) include polyamide 4, polyamide 6, polyamide 7, polyamide 9, polyamide 10, polyamide 11, polyamide 12, polyamide 26, polyamide 44, polyamide 45, polyamide 46, polyamide 48, polyamide 49, polyamide 54, polyamide 55, polyamide 56, polyamide 66, polyamide 410, polyamide 412, polyamide 58, polyamide 59, polyamide 510, polyamide 512, polyamide 64, polyamide 65, polyamide 68, polyamide 69, polyamide 610, polyamide 611, polyamide 612, polyamide 96, polyamide 98, polyamide 99, polyamide 105, polyamide 616, polyamide 618, polyamide 910, polyamide 912, polyamide 106, polyamide 108, polyamide 109, polyamide 1010, polyamide 1012, polyamide 125, polyamide 126, polyamide 129, polyamide 1210, polyamide 1212, and polyamide 122. These aliphatic homopolyamides (A-1) may be used alone or two or more thereof may be used in combination. Among these, in consideration of ease of availability, economic efficiency, and mechanical properties and heat resistance of the obtained molded article, polyamide 6 or polyamide 66 is preferable, and polyamide 6 is particularly preferable.

### (Aliphatic Copolymer Polyamide (A-2))

The aliphatic copolymer polyamide (A-2) is a polyamide resin composed of two or more types of structural units derived from aliphatic monomers. The structural unit of the aliphatic copolymer polyamide (A-2) is derived from a monomer selected from the group consisting of a combination of a diamine and a dicarboxylic acid; a lactam and an aminocarboxylic acid. Here, a combination of a diamine and a dicarboxylic acid, that is, a combination of one type of diamine and one type of dicarboxylic acid, is regarded as one type of monomer.

Examples of diamines include those exemplified as raw materials for the aliphatic homopolyamide (A-1).

Examples of dicarboxylic acids include those exemplified as raw materials for the aliphatic homopolyamide (A-1).

Examples of lactams include those exemplified as raw materials for the aliphatic homopolyamide (A-1). In addition, examples of aminocarboxylic acids include those exemplified as raw materials for the aliphatic homopolyamide (A-1).

These diamines, dicarboxylic acids, lactams and aminocarboxylic acids may be used alone or two or more thereof may be used in combination.

Specific examples of aliphatic copolymer polyamides (A-2) include copolymers in which two or more types of monomers that form polyamides exemplified as the aliphatic homopolyamides (A-1) are combined, and more specific examples thereof include aliphatic copolymer polyamides of polyamide 4/6, polyamide 6/66, polyamide 6/69, polyamide 6/610, polyamide 6/611, polyamide 6/612, polyamide 6/10, polyamide 6/11, polyamide 6/12, polyamide 6/66/11, polyamide 6/66/12, polyamide 6/66/610, polyamide 6/66/612, polyamide 6/610/12 and polyamide 6/612/12. These aliphatic copolymer polyamides (A-2) may be used alone or two or more thereof may be used in combination.

In consideration of transparency, flexibility and elasticity, the aliphatic copolymer polyamide (A-2) is preferably selected from the group consisting of polyamide 6/66, polyamide 6/69, polyamide 6/11, polyamide 6/12, polyamide 6/66/11, polyamide 6/66/12, polyamide 6/610/12 and polyamide 6/612/12, more preferably selected from the group consisting of polyamide 6/66, polyamide 6/69, polyamide 6/11, polyamide 6/12, polyamide 6/66/11 and polyamide 6/66/12, still more preferably selected from the group consisting of polyamide 6/66, polyamide 6/12 and polyamide 6/66/12, and is particularly preferably polyamide 6/66.

In consideration of transparency, flexibility and elasticity, in these aliphatic copolymer polyamides (A-2), the copolymerization ratio of polyamide 6 based on mass is preferably 50 mass% or more, more preferably 70 to 95 mass%, and still more preferably 75 to 90 mass%.

### (Method of Producing Aliphatic Polyamide Resin (A))

Examples of devices for producing the aliphatic polyamide resin (A) include known polyamide production devices, for example, a batch type reaction tank, a single-tank or multi-tank continuous reaction device, a tubular continuous reaction device, and kneading reaction extruding machines such as a single-screw kneading extruding machine and a twin-screw kneading extruding machine. As polymerization methods, known methods such as melt polymerization, solution polymerization, and solid-phase polymerization are used, and polymerization can be performed by repeating operations under atmospheric pressure, a reduced pressure, and an increased pressure. These polymerization methods may be used alone or used in appropriate combinations.

### (Ratio of Number of Methylene Groups to Number of Amide Groups)

In the aliphatic polyamide resin (A), a ratio [CH₂]/[NHCO] of the number of methylene groups ([CH₂]) to the number of amide groups ([NHCO]) (hereinafter, the ratio of the number of methylene groups to the number of amide groups will be referred to as [CH₂]/[NHCO] in some cases.) is 3 or more and 11 or less. When the [CH₂]/[NHCO] is within the above range, the molding processability and the mechanical properties and heat resistance of the obtained molded article can be improved. The [CH₂]/[NHCO] is preferably 3 or more and 9 or less, more preferably 4 or more and 8 or less, and still more preferably 4 or more and 7 or less.

Examples of aliphatic homopolyamides in which the ratio of the number of methylene groups to the number of amide groups [CH₂]/[NHCO] is 3 or more and 11 or less include polyamide 4: 3.0, polyamide 6: 5.0, polyamide 7: 6.0, polyamide 9: 8.0, polyamide 10: 9.0, polyamide 11: 10.0, polyamide 12: 11.0, polyamide 26: 3.0, polyamide 44: 3.0, polyamide 45: 3.5, polyamide 46: 4.0, polyamide 48: 5.0, polyamide 49: 5.5, polyamide 410: 6.0, polyamide 412: 7.0, polyamide 54: 3.5, polyamide 55: 4.0, polyamide 56: 4.5, polyamide 58: 5.5, polyamide 59: 6.0, polyamide 510: 6.5, polyamide 512: 7.5, polyamide 64: 4.0, polyamide 65: 4.5, polyamide 66: 5.0, polyamide 68: 6.0, polyamide 69: 6.5, polyamide 610: 7.0, polyamide 611: 7.5, polyamide 612: 8.0, polyamide 616: 10.0, polyamide 618: 11.0, polyamide 96: 6.5, polyamide 98: 7.5, polyamide 99: 8.0, polyamide 910: 8.5, polyamide 912: 9.5, polyamide 105: 6.5, polyamide 106: 7.0, polyamide 108: 8.0, polyamide 109: 8.5, polyamide 1010: 9.0, polyamide 1012: 10.0, polyamide 125: 7.5, polyamide 126: 8.0, polyamide 129: 9.5, polyamide 1210: 10.0, and polyamide 1212: 11.0. In addition, examples of aliphatic copolymer polyamides in which the ratio of the number of methylene groups to the number of amide groups [CH₂]/[NHCO] is 3 or more and 11 or less include copolymers using several raw material monomers that form the aliphatic homopolyamide. These may be used alone or two or more thereof may be used in combination.

In the case of the aliphatic copolymer polyamide (A-2), the ratio of the number of methylene groups to the number of amide groups [CH₂]/[NHCO] can be determined by multiplying the ratio of the number of methylene groups to the number of amide groups [CH₂]/[NHCO] in the homopolymer of the monomers constituting the repeating unit of the copolymer by the mole fraction of the constituent repeating unit and summing the resulting values for all the constituent repeating units.

When the aliphatic polyamide resin (A) is a mixture of two or more types of aliphatic polyamide resins, the ratio of the number of methylene groups to the number of amide groups [CH₂]/[NHCO] can be determined by multiplying the ratio of the number of methylene groups to the number of amide groups [CH₂]/[NHCO] in each aliphatic polyamide resin by the mixing ratio expressed as a molar ratio, and summing the resulting values for all the aliphatic polyamide resins.

### (Content of Aliphatic Homopolyamide (A-1) and Aliphatic Copolymer Polyamide (A-2))

The aliphatic polyamide resin (A) contains 1 to 50 mass% of the aliphatic homopolyamide (A-1) and 50 to 99 mass% of the aliphatic copolymer polyamide (A-2) based on 100 mass% of the aliphatic polyamide resin (A). When the content of the aliphatic homopolyamide (A-1) and the aliphatic copolymer polyamide (A-2) is within the above range, the transparency, flexibility and elasticity can be improved. When the content of the aliphatic homopolyamide (A-1) is less than 1 mass%, the transparency of the film deteriorates, and when the content exceeds 50 mass%, the flexibility and elasticity deteriorate. When the content of the aliphatic copolymer polyamide (A-2) is less than 50 mass%, the flexibility and elasticity deteriorate, and when the content exceeds 99 mass%, the transparency and coefficient of friction of the film deteriorate.

The content of the aliphatic homopolyamide (A-1) based on 100 mass% of the aliphatic polyamide resin (A) is preferably 3 to 30 mass%, more preferably 4 to 20 mass%, and particularly preferably 5 to 15 mass%. The content of the aliphatic copolymer polyamide (A-2) based on 100 mass% of the aliphatic polyamide resin (A) is preferably 70 to 97 mass%, more preferably 80 to 96 mass%, and particularly preferably 85 to 95 mass%.

### (Preferable Aspect of Aliphatic Homopolyamide (A-1) and Aliphatic Copolymer Polyamide (A-2))

In order to reduce the amount of film gels when made into a film and to improve the transparency, puncture strength and pinhole resistance, the aliphatic homopolyamide (A-1) is preferably polyamide 6, and the aliphatic copolymer polyamide (A-2) is preferably selected from the group consisting of polyamide 6/66, polyamide 6/69, polyamide 6/11, polyamide 6/12, polyamide 6/66/11 and polyamide 6/66/12. Among these, a combination in which the aliphatic homopolyamide (A-1) is polyamide 6 and the aliphatic copolymer polyamide (A-2) is polyamide 6/66 is particularly preferable.

### (Physical Properties of Aliphatic Polyamide Resin (A))

In consideration of molding processability, a relative viscosity of the aliphatic polyamide resin (A) is preferably 2.0 to 5.0, more preferably 2.0 to 4.5, and still more preferably 2.1 to 4.0. When the relative viscosity of the aliphatic polyamide resin (A) is within the above range, it is easier to secure the moldability of the film and the mechanical strength of the obtained film.

The relative viscosity of the aliphatic polyamide resin (A) is a value measured at 25°C with respect to 1 g of the polyamide resin (A) which is dissolved in 100 ml of 96% sulfuric acid according to JIS K 6920. When the aliphatic polyamide resin (A) is a combination of two or more types of polyamide resins, it is preferable to measure the relative viscosity by the above method. However, when a relative viscosity and mixing ratio of each polyamide resin are known, the average value calculated by summing the products of each relative viscosity and its mixing ratio may be used as the relative viscosity of the aliphatic polyamide resin (A).

In order to improve material recycling of film waste, a melting point of the aliphatic polyamide resin (A) is preferably 150 to 205°C, more preferably 150 to 200°C, and still more preferably 160 to 198°C. The melting point of the aliphatic polyamide resin (A) is a melting point of a mixture of the aliphatic homopolyamide (A-1) and the aliphatic copolymer polyamide (A-2) constituting the polyamide resin composition.

When the melting point of the aliphatic polyamide resin (A) is lower than 150°C, the mechanical strength of the molded product deteriorates. When the melting point of the aliphatic polyamide resin (A) exceeds 205°C, the material recyclability deteriorates. Specifically, for a laminate film including a layer containing at least the polyamide resin composition and a layer containing a polyolefin, a case of material recycling of waste of the film will be examined. If the melting point exceeds 205°C, when the waste is melt-kneaded and processed into pellets or the like, excessive heating is required, which causes coloration, thermal degradation and the like of the polyolefin contained in the waste.

The melting point is a melting peak temperature in a DSC curve obtained by heating the aliphatic polyamide resin (A) to 280°C in an air atmosphere, holding it at this temperature for 5 minutes, then lowering the temperature to 0°C at a cooling rate of 20°C/min, and subsequently heating from 0°C to 280°C at a rate of 20°C/min.

In order to reduce the amount of film gels, a terminal amino group concentration of the aliphatic polyamide resin (A) is preferably 2.0 to 5.5 × 10⁻⁵ eq/g, more preferably 2.5 to 5.0 × 10⁻⁵ eq/g, and still more preferably 2.8 to 4.8 × 10⁻⁵ eq/g. The terminal amino group concentration can be expressed as the equivalent of amino groups per 1 g of a polymer, and can be measured by dissolving a polyamide resin in a mixed phenol/methanol solution and titrating it with 1/50 N hydrochloric acid.

When the aliphatic polyamide resin (A) contains two or more polyamide resin components with different terminal amino group concentrations, the terminal amino group concentration in the polyamide resin is preferably measured by the above neutralization titration. However, when a terminal amino group concentration and mixing ratio of each polyamide resin component are known, the average value calculated by summing the products of each terminal amino group concentration and its mixing ratio may be used as the terminal amino group concentration of the polyamide resin.

In consideration of curbing the generation of film gels and mechanical properties of the polyamide film molded from the polyamide resin composition and, a number average molecular weight Mn of the aliphatic polyamide resin (A) measured by GPC is preferably 50,000 to 60,000, more preferably 53,000 to 60,000, and still more preferably 55,000 to 60,000.

In addition, the ratio of a weight average molecular weight Mw to the number average molecular weight Mn of the aliphatic polyamide resin (A) measured by GPC: Mw/Mn is preferably 1.5 to 3.0, more preferably 1.5 to 2.8, and still more preferably 1.6 to 2.5.

The Mn and Mw values are values measured by gel permeation chromatography (GPC).

In consideration of molding processability, a melt flow rate (MFR) of the aliphatic polyamide resin (A) measured at 230°C and a load of 2.16 kg according to ASTM D1238 is preferably 1 to 100 g/10 min, more preferably 2 to 90 g/10 min, and still more preferably 3 to 80 g/10 min.

### (Content of Aliphatic Polyamide Resin (A))

The content of the aliphatic polyamide resin (A) based on 100 mass% of the polyamide resin composition is 88 to 99 mass%. When the content of the aliphatic polyamide resin (A) is within the above range, the aliphatic polyamide resin (A) and a functional group-containing copolymer (B) of ethylene and an α-olefin having 3 to 8 carbon atoms exhibit favorable compatibility, and the melt stability of the polyamide resin composition and the moldability of the film are improved. In addition, it is possible to reduce appearance deterioration of the polyamide film molded from the polyamide resin composition due to film gels, and to maintain transparency and favorable pinhole resistance of the film. In addition, the material recyclability of waste of the film is also improved. The content of the aliphatic polyamide resin (A) based on 100 mass% of the polyamide resin composition is preferably 89 to 98 mass%.

### <Functional Group-containing Copolymer (B) of Ethylene and α-Olefin Having 3 to 8 Carbon Atoms (hereinafter referred to as copolymer (B))>

The polyamide resin composition contains a functional group-containing copolymer (B) of ethylene and an α-olefin having 3 to 8 carbon atoms. When the copolymer (B) is contained, the pinhole resistance of the film molded from the polyamide resin composition in a low-temperature environment can be improved. In addition, the copolymer (B) has a functional group, and thus functions as a compatibilizer between polyamides and polyolefins. Therefore, for a laminate film including a layer containing at least the polyamide resin composition and a layer containing a polyolefin, when waste of the film is subjected to material recycling, the compatibility between the two layers is improved, and the homogeneity of the recycled plastic raw material is improved. The copolymer (B) may be of one type or two or more types in combination.

Examples of functional groups of the copolymer (B) include a carboxyl group (which may be in the form of a salt), an acid anhydride group, a carboxylic acid ester group, a carboxylic acid imide group, a carboxylic acid amide group, and an epoxy group. It is conceivable that at least some of these functional groups react with the amino groups of the aliphatic polyamide resin (A). Among these, in consideration of compatibility between polyamides and polyolefins, at least one selected from the group consisting of a carboxyl group, a carboxylic acid ester group and an acid anhydride group is preferable, and an acid anhydride group is more preferable.

Examples of methods of introducing a functional group into a copolymer of ethylene and an α-olefin having 3 to 8 carbon atoms include (i) a method of copolymerizing copolymerizable monomers having a functional group when copolymers are polymerized, (ii) a method of introducing a functional group into the molecular chain or molecular terminal of a copolymer of ethylene and an α-olefin having 3 to 8 carbon atoms using a polymerization initiator, a chain transfer agent or the like, and (iii) a method of grafting a compound having the functional group and a graftable functional group onto a copolymer of ethylene and an α-olefin having 3 to 8 carbon atoms. These introduction methods may be used alone or used in appropriate combinations. Among these, in order to reduce appearance deterioration of the film molded from the polyamide resin composition due to film gels and to maintain transparency and favorable pinhole resistance of the film, the copolymer (B) is preferably produced by the method (ii) or (iii).

Examples of copolymerizable monomers having these functional groups and compounds having the functional group and a graftable functional group include acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endobicyclo-[2.2.1]-5-heptene-2,3-dicarboxylic acid, metal salts of these carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endo-bicyclo-[2.2.1]-5-heptene-2,3-dicarboxylic anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate. These may be used alone or two or more thereof may be used in combination. Among these, maleic anhydride, itaconic anhydride or citraconic anhydride is preferable, maleic anhydride or itaconic anhydride is still more preferable, and maleic anhydride is particularly preferable.

In consideration of compatibility between polyamides and polyolefins and reduction of the amount of film gels, a functional group concentration in the copolymer (B) is preferably 1.0 to 60 × 10⁻⁵ eq/g, more preferably 2.0 to 40 × 10⁻⁵ eq/g, and still more preferably 3.0 to 30 × 10⁻⁵ eq/g. The functional group concentration of the copolymer (B), when the functional group is a carboxyl group, an acid anhydride group or a carboxylic acid ester group, can be expressed as the equivalent of the carboxyl group per 1 g of a polymer, and is measured by neutralization titration with a 0.1 N KOH ethanol solution using a sample solution prepared using a solvent such as xylene and using phenolphthalein as an indicator.

When the copolymer (B) is a copolymer having a group derived from maleic anhydride by the method (ii) or (iii), a maleic anhydride modification rate (the content (mass%) of groups derived from maleic anhydride) is preferably 0.1 mass% to 3 mass%, more preferably 0.3 mass% to 2 mass%, and particularly preferably 0.5 mass% to 1.5 mass%. When the maleic anhydride modification rate is within the above range, the compatibility between polyamides and polyolefins can be improved, and the amount of film gels can be reduced. Examples of methods of measuring the maleic anhydride modification rate include a method of converting the equivalent of carboxyl groups obtained by the above neutralization titration into the maleic acid modification rate, and a method of performing measurement from a separately created calibration curve based on the peak intensity at a wave number of 1,780 cm⁻¹ assigned to a carbonyl group in FT-IR.

The copolymer (B) is a copolymer of ethylene and an α-olefin having 3 to 8 carbon atoms. In order to reduce appearance deterioration of the film molded from the polyamide resin composition due to film gels and maintain transparency and favorable pinhole resistance of the film, the copolymer (B) preferably does not contain a maleic anhydride monomer as a copolymerization component.

The number of carbon atoms in the α-olefin is 3 to 8, and preferably 4 to 6. Specific examples of α-olefins having 3 to 8 carbon atoms include 1-propene, 1-butene, 1-pentene, 1-hexene, 1-heptene, 1-octene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, and 3-ethyl-1-hexene. These may be used alone or two or more thereof may be used in combination. Among these, in consideration of molding processability, 1-propene, 1-butene, 1-hexene and 1-octene are preferable, 1-propene, 1-butene and 1-hexene are more preferable, and 1-hexene is particularly preferable.

In consideration of compatibility between polyamides and polyolefins, in the copolymer (B), based on a total amount of 100 mol% of ethylene monomers and α-olefin monomers having 3 to 8 carbon atoms constituting the copolymer, the proportion of α-olefin monomers having 3 to 8 carbon atoms is preferably 1 to 99 mol%, more preferably 5 to 95 mol%, and still more preferably 10 to 90 mol%.

The molecular structure of the copolymer (B) may be a linear structure or a branched structure having long or short side chains. As long as the effects of the present invention are not impaired, the copolymer (B) may be obtained by copolymerizing polyenes, for example, non-conjugated dienes such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinyl norbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbomene, 2-ethylidene-3-isopropylidene-5-norbornene, and 2-propenyl-2,5-norbornadiene, as well as non-conjugated trienes. These may be used alone or two or more thereof may be used in combination.

Among these, in consideration of compatibility between polyamides and polyolefins, the copolymer (B) is preferably a copolymer of ethylene and an α-olefin having 3 to 8 carbon atoms, which has a group derived from at least one selected from the group consisting of maleic anhydride and itaconic anhydride; more preferably an ethylene/propylene copolymer, ethylene/1-butene copolymer, ethylene/1-hexene copolymer or ethylene/1-octene copolymer, each of which has a group derived from maleic anhydride; still more preferably an ethylene/propylene copolymer, ethylene/1-butene copolymer or ethylene/1-hexene copolymer, each of which has a group derived from maleic anhydride; yet more preferably an ethylene/1-butene copolymer or ethylene/1-hexene copolymer, each of which has a group derived from maleic anhydride; and particularly preferably an ethylene/1-hexene copolymer having a group derived from maleic anhydride.

In consideration of molding processability, a melting point of the copolymer (B) is preferably 70 to 120°C, more preferably 75 to 120°C, and still more preferably 80 to 115°C. The melting point is a melting peak temperature in a DSC curve obtained by heating the copolymer (B) to 280°C in an air atmosphere, holding it at this temperature for 5 minutes, then lowering the temperature to 0°C at a cooling rate of 20°C/min, and subsequently heating from 0°C to 280°C at a rate of 20°C/min.

In order to reduce the amount of film gels, a melt flow rate (MFR) of the copolymer (B) measured at 230°C and a load of 2.16 kg according to ASTM D1238 is preferably 1 to 100 g/10 min, more preferably 3 to 90 g/10 min, and still more preferably 5 to 70 g/10 min.

### (Content of Copolymer (B))

The content of the copolymer (B) based on 100 mass% of the polyamide resin composition is 1 to 5 mass%. When the content of the copolymer (B) is within the above range, the aliphatic polyamide resin (A) and the copolymer (B) exhibit favorable compatibility, and the melt stability of the polyamide resin composition and the moldability of the film are improved. In addition, it is possible to reduce appearance deterioration of the polyamide film molded from the polyamide resin composition due to film gels, to maintain transparency of the film, and to improve pinhole resistance in a low-temperature environment. In addition, for a laminate film including a layer containing at least the polyamide resin composition and a layer containing a polyolefin, when waste of the film is subjected to material recycling, the compatibility between the two layers is improved, and the homogeneity of the recycled plastic raw material is improved. The content of the copolymer (B) based on 100 mass% of the polyamide resin composition is preferably 1.5 to 4.0 mass% and more preferably 2.0 to 3.0 mass%.

When the content of the copolymer (B) based on 100 mass% of the polyamide resin composition is less than 1 mass%, the pinhole resistance in a low-temperature environment and coefficient of friction of the molded film are not improved, and the material recyclability deteriorates. When the content exceeds 5 mass%, the dispersibility of the copolymer (B) in the polyamide resin composition deteriorates, the transparency decreases, the amount of film gels increases, and the film appearance and material recyclability deteriorate.

### <Other Component (C)>

The polyamide resin composition may contain components (C) other than the components (A) and (B). Examples of other components include polyamide resins other than the component (A), for example, polyamide resins having an alicyclic or aromatic group in the main chain or side chain: thermoplastic resins other than the component (B); an antioxidant, an anti-blocking agent, a water repellent, a lubricant, a nucleating agent, a plasticizer, a foaming agent, a stabilizer, a UV absorber, a weather resistance agent, an anti-fogging agent, and a colorant. Among these, the polyamide resin composition preferably contains a polyolefin (D) having no functional group, an antioxidant, a water repellent and/or a lubricant.

The content of the other components (C) based on 100 mass% of the polyamide resin composition is 0 to 9 mass%, more preferably 0 to 5 mass%, and still more preferably 0 to 2 mass%.

### (Polyolefin (D) Having No Functional Group (hereinafter referred to as polyolefin (D))

The polyamide resin composition may contain a polyolefin (D) having no functional group. The polyolefin (D) does not have a functional group such as those exemplified in the copolymer (B). When the polyolefin (D) is contained, the pinhole resistance and material recyclability can be improved. The polyolefin (D) may be of one type or two or more types in combination.

Examples of olefins in the polyolefin (D) include ethylene and α-olefins having 3 or more carbon atoms. Examples of α-olefins having 3 or more carbon atoms include those exemplified for the copolymer (B). The polyolefin (D) may be a homopolymer or a copolymer of two or more types of olefins. The polyolefin (D) is preferably an ethylene homopolymer or a propylene homopolymer, and more preferably an ethylene homopolymer. Examples of ethylene homopolymers include high-density polyethylene (HDPE), medium-density polyethylene (MDPE), low-density polyethylene (LDPE), and linear low-density polyethylene (LLDPE). Among these, in consideration of the transparency, mechanical strength and flexibility, a linear low-density polyethylene is preferable.

In consideration of moldability, a melt flow rate (MFR) of the polyolefin (D) measured at 190°C and a load of 2.16 kg according to ASTM D1238 is preferably 0.5 to 50 g/10 min, more preferably 1 to 40 g/10 min, and still more preferably 1 to 10 g/10 min.

The content of the polyolefin (D) based on 100 mass% of the polyamide resin composition is 0 to 9 mass%, preferably 2 to 8 mass%, and more preferably 2 to 5 mass%. When the content of the polyolefin (D) is within the above range, a polyamide resin composition exhibiting excellent mechanical strength, pinhole resistance and material recyclability can be obtained.

Even if the polyamide resin composition does not contain an anti-blocking agent, anti-blocking properties suitable for films are obtained. In consideration of economic efficiency and transparency, the polyamide resin composition is preferably substantially free of an anti-blocking agent, and in consideration of transparency, the polyamide resin composition is more preferably substantially free of silica.

Here, "substantially free of" means that the content of the anti-blocking agent or silica based on 100 mass% of the polyamide resin composition is less than 0.01 mass%, preferably less than 0.005 mass%, and more preferably less than 0.001 mass%.

In order to further improve handling properties of the molded film, the polyamide resin composition may contain an anti-blocking agent. Examples of anti-blocking agents include minerals such as diatomaceous earth, calcium carbonate, feldspars, and quartz, as well as synthetic silica and cross-linked resin beads. The anti-blocking agent may be of one type or two or more types in combination.

### (Antioxidant)

In order to further reduce the amount of film gels generated, and prevent yellowing during film molding and oxidative degradation during material recycling, the polyamide resin composition preferably contains an antioxidant. Examples of antioxidants include organic antioxidants such as phenol compounds, phosphorus compounds, and sulfur compounds, as well as inorganic antioxidants such as metal halide-based compounds. The antioxidant may be of one type or two or more types in combination.

The content of the antioxidant based on 100 mass% of the polyamide resin composition is preferably 0.01 to 1 mass%, more preferably 0.02 to 0.8 mass%, and still more preferably 0.03 to 0.7 mass%.

### (Compound (E))

The polyamide resin composition preferably contains a compound (E), which is at least one selected from the group consisting of methylenebis(stearamide), ethylenebis(stearamide), butylenebis(stearamide) and hexamethylenebis(stearamide). The compound (E) may be of one type or two or more types in combination.

The laminate film having a layer containing the polyamide resin composition can be produced by a molding method such as an air-cooled inflation molding method or a water-cooled inflation molding method. When the polyamide resin composition contains the compound (E), it is possible to prevent a decrease in transparency of the laminate film caused by water when a water-cooled inflation molding method is used and it is possible to curb hydrolysis of the composition caused by water absorption during material recycling. In addition, the compound (E) also functions as a lubricant.

The content of the compound (E) based on 100 mass% of the polyamide resin composition is preferably 0.01 to 1 mass%, more preferably 0.02 to 0.8 mass%, and still more preferably 0.03 to 0.7 mass%.

### (Compound (F))

The polyamide resin composition preferably contains a compound (F), which is at least one selected from the group consisting of terminal-modified polyalkylene glycols, phosphate esters or phosphite esters, higher fatty acid monoesters, higher fatty acids, metal salts of higher fatty acids, higher fatty acid monoamides, N-substituted higher fatty acid monoamides, magnesium silicate and substituted benzylidene sorbitols. In this specification, higher fatty acids mean fatty acids having 6 or more carbon atoms. The compound (F) may be of one type or two or more types in combination.

The compound (F) functions as a lubricant, and when the polyamide resin composition contains the compound (F), it is possible to improve slipperiness between pellets before molding, improve slipperiness between a processing machine and the pellets, or improve slipperiness between the molded films.

Among these, in order to improve the slipperiness between the processing machine and the pellets, metal salts of higher fatty acids are preferable, metal salts of stearic acid are more preferable, and magnesium stearate or calcium stearate is still more preferable. In addition, metal salts of stearic acid are preferably used because they have an effect of preventing the generation of gels during material recycling.

The content of the compound (F) based on 100 mass% of the polyamide resin composition is preferably 0.01 to 1 mass%, more preferably 0.02 to 0.8 mass%, and still more preferably 0.03 to 0.7 mass%.

### [Physical Properties of Polyamide Resin Composition]

A number average molecular weight Mn of the polyamide resin composition measured by GPC is 50,000 to 60,000. When the Mn of the polyamide resin composition is within the above range, the generation of film gels in the polyamide film molded from the polyamide resin composition can be reduced. The number average molecular weight Mn is more preferably 53,000 to 60,000, and still more preferably 55,000 to 60,000.

In addition, the ratio of a weight average molecular weight Mw to the number average molecular weight Mn of the polyamide resin composition measured by GPC: Mw/Mn is preferably 1.5 to 3.0, more preferably 1.5 to 2.8, and still more preferably 1.6 to 2.5.

The Mn and Mw values are values measured by gel permeation chromatography (GPC).

For the polyamide resin composition, when the composition is heated to 280°C in an air atmosphere, and held at this temperature for 5 minutes, the temperature is then lowered to 0°C at a cooling rate of 20°C/min, and subsequently heating is performed from 0°C to 280°C at a rate of 20°C/min, a DSC curve has a melting peak in a range of 150 to 205°C. This melting peak is derived from the aliphatic polyamide resin (A). Having such a melting peak can improve material recyclability. Specifically, for a laminate film including a layer containing at least the polyamide resin composition and a layer containing a polyolefin, when waste of the film is subjected to material recycling, if the waste is melt-kneaded and processed into pellets or the like, it is possible to reduce an increase in the melt-kneading temperature, prevent coloration and thermal degradation of the polyolefin contained in the waste due to excessive heating, and improve the performance of the obtained material recycled product. The melting peak temperature is preferably 150 to 200°C and more preferably 160 to 198°C.

When the melting peak in the DSC curve is lower than 150°C, the mechanical strength of the molded product deteriorates. When the melting peak in the DSC curve exceeds 205°C, the material recyclability deteriorates. Specifically, for a laminate film including a layer containing at least the polyamide resin composition and a layer containing a polyolefin, a case of material recycling of waste of the film will be examined. If the melting peak exceeds 205°C, when the waste is melt-kneaded and processed into pellets or the like, excessive heating is required, which causes coloration, thermal degradation and the like of the polyolefin contained in the waste.

For the polyamide resin composition, when the composition is heated to 280°C in an air atmosphere, and held at this temperature for 5 minutes, the temperature is then lowered to 0°C at a cooling rate of 20°C/min, and subsequently heating is performed from 0°C to 280°C at a rate of 20°C/min, the DSC curve preferably further has a melting peak temperature in a range of 70 to 120°C. This melting peak is derived from the copolymer (B) and/or the polyolefin (D). Having such a melting peak can improve molding processability and the strength of molded articles. The melting peak temperature is preferably in a range of 74 to 120°C and more preferably in a range of 78 to 113°C.

### [Method of Producing Polyamide Resin Composition]

The method of producing the polyamide resin composition is not particularly limited. As the method of producing the polyamide resin composition, for example, the following production methods 1 and 2 can be applied.

### (Production Method 1)

The aliphatic polyamide resin (A) and the copolymer (B) are melt-kneaded in a kneader to obtain the polyamide resin composition. The polyamide resin composition may contain other components (C). Examples of kneaders include single-screw and twin-screw extruding machines, Banbury mixers, kneaders, and mixing rollers. Any method may be used, for example, a method of mixing all raw materials and melt-kneading them using a twin-screw extruding machine, or a method of mixing some raw materials, and then mixing the remaining raw materials using a side feed during melt-kneading. When the polyamide resin composition is melted in a film molding machine or the like and processed into a film, it is preferably processed into pellets in consideration of production stability of the film and dispersibility of each component in the polyamide resin composition.

### (Production Method 2)

A first aliphatic polyamide resin (a1) and the copolymer (B) are melt-kneaded in a kneader in advance to obtain a melt-kneaded product (G). Separately, a second aliphatic polyamide resin (a2) is prepared. The melt-kneaded product (G) and the first and second aliphatic polyamide resins may each be mixed with other components (C).

The melt-kneaded product (G) and the second aliphatic polyamide resin (a2) may each be molded into pellets, and these pellets and, as necessary, the other components (C) may be then uniformly dry-blended using, for example, a tumbler or a mixer, at a specific ratio to obtain a pellet mixture. The pellet mixture can be melt-kneaded in a kneader to obtain the polyamide resin composition. As the kneader, those exemplified in the production method 1 can be used.

Among these, it is preferable to produce the polyamide resin composition by melt-kneading such a pellet mixture in a single-screw extruding machine. The copolymer (B) is melt-kneaded in advance with the first aliphatic polyamide resin (a1) to produce the melt-kneaded product (G), which is then processed into pellets, and these pellets are then dry-blended with pellets of the second aliphatic polyamide resin (a2) to produce a pellet mixture. When this pellet mixture is used, the dispersibility of the copolymer (B) in the polyamide resin composition obtained by melt-kneading is improved. The improvement in the dispersibility of the copolymer (B) is thought to contribute to the improvement in moldability of the film, the improvement in pinhole resistance of the film in a low-temperature environment, and the reduction in amount of film gels.

When the other components (C) contain the polyolefin (D) having no functional group, a first pellet containing the melt-kneaded product (G) may contain the polyolefin D. In addition, a third pellet containing the polyolefin (D) is additionally prepared in addition to the first pellet containing the melt-kneaded product (G) and a second pellet containing the second aliphatic polyamide resin (a2), and these pellets may be uniformly dry-blended at a specific ratio to obtain a pellet mixture. The pellet mixture can be melt-kneaded in a kneader to obtain the polyamide resin composition. The dry-blending and melt-kneading methods are as described above.

### [Pellet Mixture]

When the polyamide resin composition is produced by the production method 2, it is preferable to use a pellet mixture including a first pellet containing a first aliphatic polyamide resin (a1) and a functional group-containing copolymer (B) of ethylene and an α-olefin having 3 to 8 carbon atoms (hereinafter referred to as a copolymer (B)); and a second pellet containing a second aliphatic polyamide resin (a2). Here, the second pellet is not the same as the first pellet. In other words, the polyamide resin compositions constituting the first pellet and the second pellet are different from each other. The second pellet may contain less than 1.0 mass% of the copolymer (B) based on 100 mass% of the second pellet, but preferably does not contain the copolymer (B). The first pellet and the second pellet may each be of one type or two or more types in combination.

The first pellet and the second pellet may each contain other components (C) such as the polyolefin (D) having no functional group, the antioxidant, the compound (E), and the compound (F). Here, it is preferable that the second pellet do not contain the polyolefin (D) having no functional group.

In addition, the pellet mixture may contain other components (C) such as the polyolefin (D) having no functional group, the antioxidant, the compound (E), and the compound (F) in addition to the first pellet and the second pellet. In this case, it is preferable that the pellet mixture contain the polyolefin (D) having no functional group as the third pellet.

In the first aliphatic polyamide resin (a1) and the second aliphatic polyamide resin (a2), the ratio of the number of methylene groups to the number of amide groups is 3 or more and 11 or less, respectively. As the aliphatic polyamide resin (a1) and the aliphatic polyamide resin (a2), polyamide resins exemplified as the aliphatic polyamide resin (A) can be used. The aliphatic polyamide resin (a1) and the aliphatic polyamide resin (a2) may be the same as or different from each other, and are preferably different from each other. The aliphatic polyamide resin (a1) and the aliphatic polyamide resin (a2) may each be of one type or two or more types in combination.

### (First Pellet)

In consideration of melt stability during melt-kneading when the first pellet is produced, the content of the first aliphatic polyamide resin (a1) based on 100 mass% of the first pellet is preferably 60 to 90 mass%. In order to reduce the amount of film gels, the content of the first aliphatic polyamide resin (a1) based on 100 mass% of the first pellet is more preferably 65 mass% or more and still more preferably 68 mass% or more. In addition, in order to improve mechanical properties, the content of the first aliphatic polyamide resin (a1) based on 100 mass% of the first pellet is more preferably 88 mass% or less and still more preferably 85 mass% or less.

In consideration of compatibility with the copolymer (B) and transparency of the obtained film, the aliphatic polyamide resin (a1) is preferably an aliphatic homopolyamide, more preferably polyamide 6 or polyamide 66, and particularly preferably polyamide 6.

The copolymer (B), including its preferable aspects, is as described above. In consideration of molding processability, the melting point of the copolymer (B) is preferably 70°C to 120°C, more preferably 75°C to 120°C, and still more preferably 80°C to 115°C. The melting point is a melting peak temperature in a DSC curve obtained by heating the copolymer (B) to 280°C in an air atmosphere, holding it at this temperature for 5 minutes, then lowering the temperature to 0°C at a cooling rate of 20°C/min, and subsequently heating from 0°C to 280°C at a rate of 20°C/min.

In consideration of pinhole resistance and material recyclability of film waste, the content of the copolymer (B) based on 100 mass% of the first pellet is preferably 10 to 40 mass%. In consideration of pinhole resistance and material recyclability of film waste, the content of the copolymer (B) is more preferably 12 mass% or more and still more preferably 15 mass% or more. In addition, in consideration of film transparency and film gel, the content of the copolymer (B) based on 100 mass% of the first pellet is more preferably 35 mass% or less and still more preferably 32 mass% or less.

In consideration of molding processability, the content of the other components (C) based on 100 mass% of the first pellet is preferably 0 to 9 mass%. The content of the other components (C) is more preferably 3 mass% or less and still more preferably 1 mass% or less. In addition, the content of the other components (C) based on 100 mass% of the first pellet is more preferably 0.1 mass% or more and still more preferably 0.2 mass% or more. The first pellet preferably contains, as the other components (C), the antioxidant, the compound (E) and/or the compound (F).

In consideration of film moldability, the MFR of the first pellet measured at 230°C and a load of 2.16 kg according to ASTM D1238 is preferably 1 to 40 g/10 min. The MFR of the first pellet is more preferably 2 g/10 min or more, still more preferably 3 g/10 min or more, and particularly preferably 4 g/10 min or more. In addition, the MFR of the first pellet is more preferably 35 g/10 min or less, and still more preferably 30 g/10 min or less.

In consideration of pinhole resistance of the molded polyamide film in a low-temperature environment, the content of the first pellet based on 100 mass% of the pellet mixture is preferably 2 mass% or more, more preferably 4 mass% or more, and still more preferably 6 mass% or more. In addition, in consideration of dispersibility of each component in the polyamide resin composition, the content of the first pellet based on 100 mass% of the pellet mixture is preferably 25 mass% or less, more preferably 20 mass% or less, still more preferably 15 mass% or less, yet more preferably 12 mass% or less, and particularly preferably 11.5 mass% or less.

### (Second Pellet)

The second pellet contains the second aliphatic polyamide resin (a2). The content of the second aliphatic polyamide resin (a2) based on 100 mass% of the second pellet is preferably 95 to 100 mass%, more preferably 97 to 100 mass%, and still more preferably 99 to 100 mass%.

The second pellet may contain less than 1.0 mass% of the copolymer (B) based on 100 mass% of the second pellet. In a preferable aspect, the second pellet does not contain the copolymer (B).

The second aliphatic polyamide resin (a2) preferably contains 0 to 20 mass% of an aliphatic homopolyamide and 80 to 100 mass% of an aliphatic copolymer polyamide based on 100 mass% of the aliphatic polyamide resin (a2). The aliphatic polyamide resin (a2) more preferably contains only an aliphatic copolymer polyamide.

In the aliphatic polyamide resin (a2), the aliphatic copolymer polyamide is preferably selected from the group consisting of polyamide 6/66, polyamide 6/69, polyamide 6/11, polyamide 6/12, polyamide 6/66/11 and polyamide 6/66/12, and particularly preferably polyamide 6/66.

In consideration of molding processability, the content of the other components (C) based on 100 mass% of the second pellet is preferably 5 mass% or less, more preferably 0 to 3 mass%, and still more preferably 0 to 1 mass%. The second pellet preferably contains, as the other components (C), the antioxidant, the compound (E) and/or the compound (F).

A relative viscosity of the second aliphatic polyamide resin (a2) measured at 25°C with respect to 1 g of the polyamide resin which is dissolved in 100 ml of 96% sulfuric acid according to JIS K 6920 is preferably 2.5 to 5.0. When the relative viscosity of the second aliphatic polyamide resin (a2) is within the above range, film molding processability can be improved. The relative viscosity of the second aliphatic polyamide resin (a2) is more preferably 2.8 or more and still more preferably 2.9 or more. The relative viscosity of the second aliphatic polyamide resin (a2) is more preferably 4.5 or less and still more preferably 4.1 or less.

When the second aliphatic polyamide resin (a2) is a combination of two or more types of resins, it is preferable to measure the relative viscosity by the above method. However, when a relative viscosity and mixing ratio of each polyamide resin are known, the average value calculated by summing the products of each relative viscosity and its mixing ratio may be used as the relative viscosity of the second aliphatic polyamide resin (a2).

In consideration of molding processability and material recyclability of film waste, a melting point of the second aliphatic polyamide resin (a2) is preferably 150°C to 205°C and more preferably 150°C to 200°C. The melting point is a melting peak temperature in a DSC curve obtained by heating the second aliphatic polyamide resin (a2) to 280°C in an air atmosphere, holding it at this temperature for 5 minutes, then lowering the temperature to 0°C at a cooling rate of 20°C/min, and subsequently heating from 0°C to 280°C at a rate of 20°C/min.

In consideration of film molding processability, the MFR of the second aliphatic polyamide resin (a2) measured at 230°C and a load of 2.16 kg according to ASTM D1238 is preferably 1 to 20 g/10 min, more preferably 1 to 18 g/10 min, and still more preferably 2 to 15 g/10 min.

In consideration of film transparency, the content of the second pellet based on 100 mass% of the pellet mixture is preferably 66 mass% or more, more preferably 72 mass% or more, still more preferably 80 mass% or more, and particularly preferably 83.5 mass% or more. In addition, in consideration of pinhole resistance, the content of the second pellet based on 100 mass% of the pellet mixture is preferably 98 mass% or less, more preferably 96 mass% or less, and still more preferably 94 mass% or less.

### (Content of Aliphatic Homopolyamide and Aliphatic Copolymer Polyamide)

In the first pellet and the second pellet, based on a total amount of 100 mass% of the first aliphatic polyamide resin (a1) and the second aliphatic polyamide resin (a2), the content of the aliphatic homopolyamide is 1 to 50 mass%, and the content of the aliphatic copolymer polyamide is 50 to 99 mass%. When the content of the aliphatic homopolyamide and the aliphatic copolymer polyamide is within the above range, the transparency, flexibility and elasticity of the film can be improved.

The content of the aliphatic homopolyamide based on a total amount of 100 mass% of the aliphatic polyamide resin (a1) and the aliphatic polyamide resin (a2) is preferably 3 to 30 mass%, more preferably 4 to 20 mass%, and particularly preferably 5 to 15 mass%. The content of the aliphatic copolymer polyamide based on a total amount of 100 mass% of the aliphatic polyamide resin (a1) and the aliphatic polyamide resin (a2) is preferably 70 to 97 mass%, more preferably 80 to 96 mass%, and particularly preferably 85 to 95 mass%.

### (Third Pellet)

When the polyamide resin composition contains, as the other components (C), the polyolefin (D) having no functional group, the pellet mixture may contain, in addition to the first pellet and the second pellet, a third pellet containing the polyolefin (D). In this case, it is preferable that the first pellet and the second pellet do not contain the polyolefin (D). When the pellet mixture contains the third pellet, the pinhole resistance of the film is improved. The third pellet may be of one type or two or more types in combination.

The content of the polyolefin (D) based on 100 mass% of the third pellet is preferably 95 to 100 mass%, more preferably 97 to 100 mass%, and still more preferably 99 to 100 mass%. The third pellet may contain, as the other components (C), the antioxidant, the compound (E) and/or the compound (F).

In consideration of mechanical strength, pinhole resistance and material recyclability, the content of the third pellet based on 100 mass% of the pellet mixture is preferably 0 to 9 mass%, more preferably 2 to 8 mass%, and still more preferably 2 to 5 mass%. The content of the third pellet based on 100 mass% of the pellet mixture may be 0 mass% or more, and is preferably 2 mass% or more. In addition, the content of the third pellet based on 100 mass% of the pellet mixture is preferably 9 mass% or less, more preferably 8 mass% or less, and still more preferably 5 mass% or less.

### (Pellet Mixture)

The total content of the first aliphatic polyamide resin (a1) and the second aliphatic polyamide resin (a2) based on 100 mass% of the kneaded product obtained after the pellet mixture is melt-kneaded is preferably 88 to 99 mass% and more preferably 89 to 98 mass%. When the total content of the first aliphatic polyamide resin (a1) and the second aliphatic polyamide resin (a2) is within the above range, the aliphatic polyamide resin (A) and the copolymer (B) exhibit favorable compatibility, and the melt stability of the polyamide resin composition and the moldability of the film are improved. In addition, it is possible to reduce appearance deterioration of the polyamide film molded from the polyamide resin composition due to film gels, and to maintain transparency and favorable pinhole resistance of the film. In addition, the material recyclability of the film waste is also improved.

The content of the copolymer (B) based on 100 mass% of the kneaded product obtained after the pellet mixture is melt-kneaded is preferably 1 to 5 mass%, more preferably 1.5 to 4.0 mass%, and still more preferably 2.0 to 3.0 mass%. When the content of the copolymer (B) is within the above range, the aliphatic polyamide resin (A) and the copolymer (B) exhibit favorable compatibility, and the melt stability of the polyamide resin composition and the moldability of the film are improved. In addition, it is possible to reduce appearance deterioration of the polyamide film molded from the polyamide resin composition due to film gels, to maintain transparency of the film, and to improve pinhole resistance in a low-temperature environment. In addition, for a laminate film including a layer containing at least the polyamide resin composition and a layer containing a polyolefin, when waste of the film is subjected to material recycling, the compatibility between the two layers is improved, and the homogeneity of the recycled plastic raw material is improved.

In consideration of molding processability, the content of the other components (C) based on 100 mass% of the kneaded product obtained after the pellet mixture is melt-kneaded is preferably 0 to 9 mass%, more preferably 0 to 5 mass%, and still more preferably 0 to 2 mass%.

When the pellet mixture contains the third pellet, in consideration of mechanical strength, pinhole resistance and material recyclability, the content of the polyolefin (D) based on 100 mass% of the kneaded product obtained after the pellet mixture is melt-kneaded, preferably 2 to 8 mass% and more preferably 2 to 5 mass%.

In order to reduce the amount of film gels, a number average molecular weight Mn of the kneaded product obtained by melt-kneading the pellet mixture measured by GPC is preferably 50,000 to 60,000, more preferably 53,000 to 60,000, and still more preferably 55,000 to 60,000.

In addition, the ratio of a weight average molecular weight Mw to the number average molecular weight Mn of the kneaded product obtained by melt-kneading the pellet mixture measured by GPC: Mw/Mn is preferably 1.5 to 3.0, more preferably 1.5 to 2.8, and still more preferably 1.6 to 2.5.

The Mn and Mw values are values measured by gel permeation chromatography (GPC).

The pellet mixture can be melt-kneaded to obtain the polyamide resin composition. A preferable range of the melting peak temperature of the polyamide resin composition thus obtained is as described above.

Another aspect of the present invention is the first pellet for use in production of the pellet mixture, which is mixed with the second pellet. Still another aspect of the present invention is the second pellet for use in production of the pellet mixture, which is mixed with the first pellet.

### (Production of Pellet)

Pellets are obtained, for example, by extruding the polyamide resin composition into strands using an extruding machine or the like and cutting the strands with a cutter having a rotary knife.

Examples of pellet shapes include a spherical shape, a strip shape, a spheroidal shape, a shape slightly deformed from a perfect spheroid, and a columnar shape with a circular or elliptical cross section. Among these, preferable pellet shapes are a spherical shape, a spheroidal shape, or a columnar shape with a circular or elliptical cross section.

When the pellet has an elliptical cross section, its major diameter is preferably 1 to 5 mm, more preferably 2 to 4 mm, and still more preferably 2.0 to 3.5 mm. In addition, when the pellet has an elliptical cross section, its minor diameter is preferably 1 to 3 mm, and more preferably 2 to 3 mm. A ratio of the major diameter to the minor diameter (major diameter/minor diameter) is not particularly limited, and is preferably 1 to 4.

The major diameter and minor diameter of the pellet can be controlled, for example, by adjusting a diameter of a nozzle of the extruding machine and the like and changing a diameter of the strand.

The length of the pellet is not particularly limited, and is preferably 2 to 4 mm and more preferably 2.5 to 4.0 mm or less.

### [Polyamide Film]

The polyamide film contains the polyamide resin composition. The polyamide film may be an unstretched polyamide film or may be a stretched polyamide film obtained by stretching the unstretched polyamide film. In consideration of mechanical strength, a stretched polyamide film is preferable.

A method of producing the polyamide film is not particularly limited, and for example, known production methods can be applied. For example, the polyamide film can be produced by melt-kneading the polyamide resin composition obtained by the production method 1 using an extruding machine, extruding it into a film using a die such as a T-die or a coat hanger die, casting it onto the surface of a casting roller, and then cooling it.

In addition, according to the production method 2, the polyamide film can be produced by melt-kneading the melt-kneaded product (G) or the first pellet, the aliphatic polyamide resin (a2) or the second pellet, and optional other components using an extruding machine, and then using the same method as above. In addition, the polyamide film can be produced by melt-kneading the pellet mixture using an extruding machine or the like, and then using the same method as above.

The produced polyamide film may be stretched to form a stretched film. In this case, the produced polyamide film may be uniaxially stretched to form a uniaxially stretched film or may be biaxially stretched (simultaneously biaxially stretched or sequentially biaxially stretched) to form a biaxially stretched film.

The stretching method is not particularly limited, and examples thereof include a uniaxial stretching method using a heating roller, a simultaneous biaxial stretching method using a tubular method, and a sequential biaxial stretching method using a heating roller and a tenter. The temperature of the heating roller is not particularly limited, and may be in a range of 35°C to 130°C, and may be appropriately selected depending on the material of the polyamide film and a desired stretching ratio. The stretching ratio is a stretching ratio in an extrusion direction (machine direction, MD) of the film and in a perpendicular direction (transverse direction, TD) to the extrusion direction of the film. The stretching ratio of the film in the machine direction is not particularly limited, and is preferably 2 times or more, more preferably 2 to 6 times, and particularly preferably 2.5 to 5 times. The stretching ratio in the transverse direction to the machine direction of the film is not particularly limited, and is preferably 2 times or more, more preferably 2 to 6 times, and particularly preferably 2.5 to 5 times. The stretching ratio can be adjusted depending on the purpose.

A thickness of the film is not particularly limited, and may be appropriately selected depending on the purpose and the like. In the case of a single-layer polyamide film, the thickness of the film may be, for example, 10 µm to 300 µm when the film is an unstretched film, and 5 µm to 100 µm when the film is a stretched film.

The polyamide film exhibits an excellent pinhole resistance property. Specifically, the pinhole resistance can be evaluated by subjecting an unstretched polyamide film to a bending test for 1,000 cycles at 5°C using a gelbo flex tester (commercially available from Tester Sangyo Co., Ltd.) according to MIL-B-131C, then placing the film on a recording paper, then applying an Indian ink, and measuring the number of black spots recorded on the recording paper. The number of black spots measured is preferably 110 or less/0.03 m², more preferably 80 or less/0.03 m², and still more preferably 70 or less/0.03 m².

A haze ratio of the polyamide film is preferably 25% or less, more preferably 15% or less, and still more preferably 10% or less. Here, the haze ratio of the polyamide film is measured according to ASTM D-1003.

A gloss value of the polyamide film is preferably 50% or more, more preferably 80% or more, and still more preferably 100% or more. Here, the gloss value of the polyamide film is measured according to ASTM D-523.

### [Laminate Film]

The laminate film has at least one layer containing the polyamide resin composition (also referred to as a polyamide film layer). Examples of methods of producing the laminate film include a method including a process of laminating an additional layer on one side or both sides of the polyamide film. The lamination method is not particularly limited, and examples thereof include a co-extrusion method, an extrusion lamination method, and a dry lamination method as described in JP 2011-225870 A, and in consideration of economic efficiency, a co-extrusion method is preferable. The produced laminate film may be stretched to form a stretched laminate film. In this case, the produced laminate film may be uniaxially stretched to form a uniaxially stretched film laminate or may be biaxially stretched (simultaneously biaxially stretched or sequentially biaxially stretched) to form a biaxially stretched film laminate. The stretching method and stretching ratio are as described in the section of the polyamide film.

### (Inflation Film Molding)

A laminate film can be produced by a molding method such as an air-cooled inflation molding method or a water-cooled inflation molding method. Among these, in the air-cooled inflation method, a simple facility is required, a width of the film can be easily changed by simply adjusting the blow ratio, and thus workability is improved and the film can be produced with favorable productivity.

The conditions for molding a film by air-cooled inflation molding are not particularly limited, and a molding temperature is preferably from a melting point of the raw material resin used to lower than 300°C. The molding temperature may be, for example, 230°C to 260°C. In addition, a blow-up ratio is a ratio of the maximum bubble diameter to the diameter of the die, and the blow-up ratio is preferably 1.1 to 3.0 and more preferably 1.2 to 2.5. A take-up speed is determined by the thickness, width, and extrusion amount of the film, and can be adjusted within a range in which film-forming stability can be maintained, and generally, it is preferably 1 to 150 m/min and more preferably 5 to 100 m/min.

### (Additional Layer)

The additional layer is not particularly limited as long as the laminate film exhibits the effects of the polyamide film, and examples thereof include a polyolefin layer and an adhesive layer. Here, the adhesive layer is appropriately selected in order to improve the moldability and adhesion between the polyamide film layer according to the present invention and the polyolefin layer. Here, the polyamide film layer according to the present invention is neither the polyolefin layer nor the adhesive layer.

The polyolefin layer and the adhesive layer may contain additives. As the additives, those exemplified as other components (C) can be used.

Examples of polyolefins constituting the polyolefin layer include non-polar polyolefins such as low-density polyethylene, linear low-density polyethylene, high-density polyethylene, copolymers of ethylene and α-olefin having 3 or more carbon atoms, propylene homopolymers, and copolymers of propylene and α-olefin having 4 or more carbon atoms, as well as ethylene/acrylic acid copolymers, ethylene/vinyl acetate copolymers, ethylene/acrylic acid ester copolymers, and ethylene/methacrylic acid copolymers. Among these, in consideration of food packaging applications, non-polar polyolefins and ethylene/vinyl acetate copolymers are preferable, and particularly, linear low-density polyethylene is more preferable. When the polyolefin layer is a non-polar polyolefin layer, the water vapor barrier property of the laminate film tends to be further improved. When the polyolefin layer is an ethylene/vinyl acetate copolymer layer, the oxygen gas permeability of the laminate film tends to be further lowered. A laminate film including at least the polyamide film layer and the polyolefin layer is not only suitably usable for food packaging but also has excellent material recyclability for waste of the film.

The adhesive layer is composed of an adhesive resin or an adhesive. Examples of adhesive resins include acid-modified polyolefin resins such as an acid-modified polyethylene, e.g., maleic acid modified polyethylene, which are grafted with at least one monomer selected from unsaturated carboxylic acids and derivatives thereof, as well as ionomers, ethylene/acrylic acid copolymers, and ethylene/methacrylic acid copolymers. Examples of adhesives include solvent-based adhesives and solvent-free adhesives, which may be a single-component adhesive or a two-component mixture adhesive. Examples of adhesives include epoxy adhesives and urethane adhesives, and urethane adhesives are preferable. Examples of urethane adhesives include aromatic ether-based adhesives, aliphatic ester-based adhesives, and aromatic ester-based adhesives.

### (Layer Structure)

Examples of specific layer structures of the laminate film include two layers including the polyamide film layer and the polyolefin layer; three layers including the polyamide film layer/the adhesive layer/the polyolefin layer; at least three layers including the polyamide film layer and the polyolefin layer, as well as one or more additional layers selected from the group consisting of the polyamide film layer, the adhesive layer and the polyolefin layer; and at least four layers including the polyamide film layer, the polyolefin layer and the adhesive layer, as well as one or more additional layers selected from the group consisting of the polyamide film layer, the adhesive layer and the polyolefin layer. Among these, in consideration of food packaging applications, a laminate film including at least three layers, laminated in the order of the layer containing the polyamide resin composition, the adhesive layer, and the polyolefin layer, or a laminate film including at least five layers, laminated in the order of the adhesive layer and the polyolefin layer on both sides of the layer containing the polyamide resin composition is preferable. In addition, when the laminate film is an unstretched laminate film and is a deep-draw packaging film, it is preferable that the polyolefin layer be an inner layer. Here, in the laminate film, the layer in contact with the outside air is an outer layer, and the layer in contact with food to be packaged is an inner layer. In addition, the layer containing the polyamide resin composition may be a biaxially stretched layer.

### (Thickness)

The thickness of the laminate film is not particularly limited, and can be selected depending on applications. The thickness of each layer of the polyamide film in the laminate film may be 1 to 300 µm, and is preferably 2 to 100 µm, and more preferably 5 to 80 µm. The thickness of each polyolefin layer can be appropriately selected depending on the purpose, and is preferably, for example, in a range of 8 to 120 µm. The thickness of each adhesive layer can be selected depending on the purpose, and is preferably, for example, in a range of 1 to 100 µm. The total film thickness of the laminate film is not particularly limited, and is preferably 5 to 500 µm, more preferably 20 to 300 µm, and particularly preferably 50 to 200 µm.

### [Applications]

The polyamide resin composition and pellet mixture can be used as raw materials for various molded products. Molded products containing the polyamide resin composition can be used in a wide range of applications, including packaging films for food packaging, etc., automotive members, computers and related devices, optical device members, electrical and electronic devices, information and communication devices, precision devices, civil engineering and construction products, medical products, and household products, and are suitable for packaging films, and particularly useful for food packaging films.

The polyamide film and the laminate film exhibit no appearance deterioration due to film gels and exhibit excellent pinhole resistance in a low-temperature environment. Therefore, the polyamide film and the laminate film can be suitably used for product packaging, particularly for food packaging.

The unstretched polyamide film and the unstretched laminate film have excellent deep-drawability and thus can be suitably used as food packaging films, particularly, deep-draw food packaging films. When the unstretched polyamide film is used as a deep-draw packaging film, foodstuffs are placed in the deep-draw packaging base material obtained by deep-draw molding the film and packaged using a lid material. Examples of foodstuffs placed in the deep-draw packaging base material include sliced foodstuffs such as ham and cheese. The lid material is not particularly limited, and may be appropriately selected depending on the purpose.

Since the stretched polyamide film and the stretched laminate film exhibit excellent mechanical strength and oxygen barrier properties, they are useful as food packaging films for filling and packaging semi-liquid foodstuffs such as sausages (paste products), solid foodstuffs such as processed meats and hams, and the like.

Particularly, the laminate film including at least the layer containing the polyamide resin composition and the polyolefin layer, and the laminate film including the layer containing the polyamide resin composition, the adhesive layer and the polyolefin layer laminated in that order are not only suitably usable for food packaging but are also useful due to their excellent material recyclability for waste of the film.

### Examples

Hereinafter, the present invention will be described in more detail with reference to examples and comparative examples, but the present invention is not limited to these examples, and can be appropriately modified and implemented without departing from the spirit and scope of the invention.

### [Measurement of Physical Properties of Raw Materials, First to Third Pellets, and Polyamide Resin Composition]

The following physical properties were evaluated for raw materials, first to third pellets and polyamide resin compositions.

### 1. Relative Viscosity

A relative viscosity of the aliphatic polyamide resin (A) was measured at 25°C with respect to 1 g of the polyamide resin which was dissolved in 100 ml of 96% sulfuric acid according to JIS K 6920.

### 2. DSC Measurement

### (1) Raw Materials

The raw materials were measured by a differential scanning calorimeter (DSC). The sample was heated to 280°C at a rate of 20°C/min in an air atmosphere, held at this temperature for 5 minutes, the temperature was then lowered to 0°C at a cooling rate of 20°C/min, and subsequently heating was performed from 0°C to 280°C at a rate of 20°C/min. The top temperature of the endothermic peak during the second heating was used as the melting peak temperature (melting point).

### (2) Polyamide Resin Composition

The polyamide resin compositions were measured using a differential scanning calorimeter (DSC). The sample was heated to 280°C at a rate of 20°C/min in an air atmosphere, held at this temperature for 5 minutes, the temperature was then lowered to 0°C at a cooling rate of 20°C/min, and the top temperature of the exothermic peak at this time was used as the crystallization temperature. Next, the sample was heated from 0°C to 280°C at a rate of 20°C/min. The top temperature of the endothermic peak during the second heating was used as the melting peak temperature (melting point).

### 3. MFR (230°C and a load of 2.16 kg)

An MFR of the aliphatic polyamide resin (A) and the acid-modified ethylene/α-olefin copolymer (B) was measured according to ASTM D1238 under conditions of 230°C and a load of 2.16 kg. In addition, an MFR of the polyolefin (D) having no functional group was measured according to ASTM D1238 under conditions of 190°C and a load of 2.16 kg.

### 4. Terminal Amino Group Concentration

A predetermined amount of a polyamide resin was put into an Erlenmeyer flask with a stopcock, and 40 mL of a previously prepared solvent: phenol/methanol (a volume ratio of 7/3) was added thereto, the mixture was then stirred and dissolved using a magnetic stirrer, and titrated with 1/50 N hydrochloric acid using thymol blue as an indicator, and thereby a terminal amino group concentration (eq/g) of the aliphatic polyamide resin (A) was determined.

### 5. Molecular Weight Measured by GPC

GPC measurement was performed using HLC-8320GPO (commercially available from Tosoh Corporation) under the following conditions, and a number average molecular weight Mn and a weight average molecular weight Mw of the polyamide resin composition were calculated in terms of PMMA.
Column: TSKgel Super AW3000 + TSKgel Super AW5000
Eluent: 10 mM CF₃COOHNa/TFE
Detector: RI
Temperature: 40°C
Flow rate: sample 0.3 ml/min, reference 0.15 ml/min
Sample concentration: about 0.1 wt/vol%
Injection amount: 20 µl

### [Raw Materials Used]

Raw materials used in examples and comparative examples are as follows.

### (1) Aliphatic Polyamide Resin (A)

Polyamide resin (A-1): polyamide 6, commercially available from UBE Corporation (relative viscosity: 2.2; melting point: 220°C; MFR measured at 230°C and a load of 2.16 kg according to ASTM D1238: 60.0 g/10 min; terminal amino group concentration: 3.3×10⁻⁵ eq/g)

Polyamide resin (A-2): a copolymer of polyamide 6 and polyamide 66, commercially available from UBE Corporation (copolymerization ratio (based on mass), polyamide 6: polyamide 66 = 80 mass%: 20 mass%; relative viscosity: 4.0; melting point: 192°C; terminal amino group concentration: 3.5×10⁻⁵ eq/g); MFR measured at 230°C and a load of 2.16 kg according to ASTM D1238: 3.9 g/10 min

Polyamide resin (A-3): polyamide 6, commercially available from UBE Corporation (relative viscosity: 3.4; melting point: 220°C; MFR measured at 230°C and a load of 2.16 kg according to ASTM D1238: 6.4 g/10 min; terminal amino group concentration: 4.0×10⁻⁵ eq/g)

### (2) Acid-Modified Ethylene/α-Olefin Copolymer (B)

Maleic anhydride modified ethylene/1-hexene copolymer (B-1): commercially available from Ube-Maruzen Polyethylene Co., Ltd., F3000 (melting point: 115°C; MFR measured at 230°C and a load of 2.16 kg according to ASTM D1238: 8.5 g/10 min; a maleic anhydride modification rate of 1 mass%)

### (3) Polyolefin (D) Having No Functional Group

Linear low-density polyethylene (D-1): commercially available from Ube-Maruzen Polyethylene Co., Ltd., 1520F (melting point: 114°C; MFR measured at 190°C and a load of 2.16 kg according to ASTM D1238: 2 g/10 min)

### (4) Other Raw Materials

Antioxidant: hindered phenol-based antioxidant (commercially available from BASF, Irganox (registered trademark) 1010)
Compound (E): ethylenebis(stearamide) (commercially available from Kyoeisha Chemical Co., Ltd.)
Compound (F)1: magnesium stearate (commercially available from NOF Corporation, magnesium stearate)
Compound (F)2: calcium stearate (commercially available from NOF Corporation, calcium stearate)

### Example 1

2.50 mass% of the maleic anhydride modified ethylene/1-hexene copolymer (B-1) was added to 10.00 mass% of the polyamide resin (A-1) as the first aliphatic polyamide resin (a1), and the mixture was melt-kneaded using a twin-screw kneader ZSK32McPlus (commercially available from Coperion GmbH, a screw diameter of 32 mm) at a cylinder temperature of 230°C, a screw rotation speed of 500 rpm, and a discharge amount of 75 kg/h in the twin-screw kneader to produce first pellets. Next, second pellets were produced using the polyamide resin (A-2) as the second aliphatic polyamide resin (a2). Finally, 12.50 mass% of the first pellets, 87.28 mass% of the second pellets, 0.10 mass% of the antioxidant, 0.06 mass% of the compound (E), 0.03 mass% of the compound (F)1 and 0.03 mass% of the compound (F)2 were dry-blended to obtain a pellet mixture. Table 1 shows the formulation of the pellet mixture of Example 1.

Using the pellet mixture of Example 1, unstretched polyamide films a and b were produced as follows.

### Unstretched Polyamide Film a

Using the pellet mixture of Example 1, an unstretched polyamide film a with a thickness of 50 µm was produced using a 40 mmφ Ex T-die film molding machine (commercially available from Research Laboratory of Plastics Technology Co., Ltd.).

### Unstretched Polyamide Film b

Using the pellet mixture of Example 1, an unstretched polyamide film b with a thickness of 30 µm was produced using a 40 mmφ Ex T-die film molding machine (commercially available from Research Laboratory of Plastics Technology Co., Ltd.).

### Examples 2 and 5 and Comparative Examples 1, 2, 4 and 5

Pellet mixtures and polyamide films a and b of Examples 2 and 5 and Comparative Examples 1, 2, 4 and 5 were obtained in the same manner as in Example 1 except that the types and proportions of the components were changed as shown in Table 1.

### Example 3

2.50 mass% of the maleic anhydride modified ethylene/1-hexene copolymer (B-1) was added to 5.80 mass% of the polyamide resin (A-1) as the first aliphatic polyamide resin (a1), the mixture was melt-kneaded using a twin-screw kneader ZSK32McPlus (commercially available from Coperion GmbH, a screw diameter of 32 mm) at a cylinder temperature of 230°C, a screw rotation speed of 500 rpm, and a discharge amount of 75 kg/h in the twin-screw kneader to produce first pellets. Next, second pellets were produced using the polyamide resin (A-2) as the second aliphatic polyamide resin (a2). In addition, third pellets were produced using the linear low-density polyethylene (D-1) as the polyolefin (D) having no functional group. Finally, 8.30 mass% of the first pellets, 88.98 mass% of the second pellets, 2.50 mass% of the third pellets, 0.10 mass% of the antioxidant, 0.06 mass% of the compound (E), 0.03 mass% of the compound (F)1 and 0.03 mass% of the compound (F)2 were dry-blended to obtain a pellet mixture. Table 1 shows the formulation of the pellet mixture of Example 3.

Polyamide films a and b were obtained in the same manner as in Example 1 except that the pellet mixture of Example 3 was used.

### Example 4

A pellet mixture and polyamide films a and b of Example 4 were obtained in the same manner as in Example 3 except that the proportions of the components were changed as shown in Table 1.

### Comparative Example 3

Only pellets of the polyamide resin (A-2) were used. 99.78 mass% of the pellets, 0.10 mass% of the antioxidant, 0.06 mass% of the compound (E), 0.03 mass% of the compound (F)1 and 0.03 mass% of the compound (F)2 were dry-blended to obtain a pellet mixture. Table 1 shows the formulation of the pellet mixture of Comparative Example 3. The pellets used in Comparative Example 3 are shown in the row of "Second pellet" of Table 1.

Polyamide films a and b were obtained in the same manner as in Example 1 except that the pellet mixture of Comparative Example 3 was used.

Table 1 shows the formulations of Examples 1 to 5 and Comparative Examples 1 to 5 and various physical properties of the obtained polyamide resin compositions. Here, in Table 1, the high-temperature side and low-temperature side melting peak temperatures are top temperatures of the endothermic peaks observed in the DSC curve in the ranges of 150°C to 250°C and 70°C to 120°C, respectively. In addition, the high-temperature side and low-temperature side crystallization temperatures are top temperatures of the exothermic peaks observed in the DSC curve in the ranges of 120°C to 200°C and 60°C to 110°C, respectively. The notation "n.d." in the rows for the low-temperature side melting peak temperature and the low-temperature side crystallization temperature indicates that no peak was detected.

### [Table 1]

**Table 1**

| | | | Example1 | Example2 | Example3 | Example4 | Example5 | Comparative Example1 | Comparative Example2 | Comparative Example3 | Comparative Example4 | Comparative Example5 |
|---|---|---|---|---|---|---|---|---|---|---|---|---|
| First pellet | Polyamide resin(A-1) polyamide 6, melting point 220°C | % | 10.00 | 5.80 | 5.80 | 5.80 | 11.70 | 40.00 | 23.00 | - | 16.30 | 5.80 |
| | Maleic anhydride modified ethylene/1-hexene copolymer (B-1)/F3000, melting point 115°C | % | 2.50 | 2.50 | 2.50 | 2.50 | 5.00 | 10.00 | 10.00 | - | 7.00 | 2.50 |
| Second pellet | Polyamide resin (A-2) polyamide 6/66, melting point 192°C | % | 87.28 | 91.48 | 88.98 | 83.98 | 83.08 | 49.78 | 66.78 | 99.78 | 76.18 | - |
| | Polyamide resin (A-3) polyamide 6, melting point 220°C | % | - | - | - | - | - | - | - | - | - | 91.48 |
| Third pellet | Linear low-density polyethylene(D-1)/1520F, melting point 114°C | % | - | - | 2.5D | 7.50 | - | - | - | - | - | - |
| Antioxidant | Irganox^{®}1010 | % | 0.10 | 0.10 | 0.10 | 0.10 | 0.10 | 0.10 | 0.10 | 0.10 | 0.10 | 0.10 |
| Compound(E) | Ethylenebis(stearamide) | % | 0.05 | 0.06 | 0.06 | 0.06 | 0.06 | 0.06 | 0.06 | 0.06 | 0.06 | 0.06 |
| Compound(F) | Magnesium stearate | % | 0.03 | 0.03 | 0.03 | 0.03 | 0.03 | 0.03 | 0.03 | 0.03 | 0.03 | 0.03 |
| | Calcium stearate | % | 0.03 | 0.03 | 0.03 | 0.03 | 0.03 | 0.03 | 0.03 | 0.03 | 0.03 | 0.03 |
| Sum | | | 100.00 | 100.00 | 100.00 | 100.00 | 100.00 | 100.00 | 100.00 | 100.00 | 100.00 | 100.00 |
| Polyamide resin composition | Content of aliphatic polyamide resin(A) | % | 97.28 | 97.28 | 94.78 | 89.78 | 94.78 | 89.78 | 89.78 | 99.78 | 92.78 | 97.28 |
| | Proportion of aliphatic homopolyamide in aliphatic polyamide resin(A) | % | 10.3 | 6.0 | 6.1 | 6.5 | 12.3 | 44.6 | 25.6 | 0.0 | 17.6 | 100.0 |
| | Proportion of aliphatic copolymer polyamide in aliphatic polyamide resin(A) | % | 89.7 | 94.0 | 93.9 | 93.5 | 87.7 | 55.4 | 74.4 | 100.0 | 82.4 | 0.0 |
| | High-temperature side melting peak temperature | °C | 197.3 | 194.3 | 194.4 | 194.2 | 202.2 | 213.1 | 207.7 | 190.6 | 204.7 | 223.0 |
| | High-temperature side crystallization temperature | °C | 151.5 | 149.8 | 149.3 | 149.9 | 159.1 | 166.6 | 162.3 | 138.5 | 162.0 | 162.0 |
| | Low-temperature side melting peak temperature | °C | 103.1 | 103.6 | 106.0 | 105.2 | 104.0 | 103.7 | 103.7 | n.d. | 104.0 | 102.0 |
| | Low-temperature side crystallization temperature | °C | 92.5 | 91.4 | 93.2 | 93.2 | 91.2 | 91.7 | 90.8 | n.d. | 92.2 | 93.0 |
| | Number average molecular weight Mn | | 56,309 | 58,592 | 59,131 | 58,307 | 55,108 | 41,092 | 48,548 | 60,367 | 52,102 | 48,321 |
| | Weight average molecular weight Mw | | 108,780 | 113.149 | 113.086 | 112.150 | 109.043 | 84,696 | 98,929 | 113,654 | 99,832 | 90,012 |
| | Mw/Mn | | 1.93 | 1.93 | 1.91 | 1.92 | 1.98 | 2.06 | 2.04 | 1.88 | 1.92 | 1.86 |

### [Evaluation

The following properties were evaluated for the polyamide films produced in Examples 1 to 5 and Comparative Example 1 to 5. The evaluation results are shown in Table 2.

### 1. Resin Pressure and Resin Temperature During Film Molding

When the unstreched polyamide film a was produced, the resin pressure and resin temperature at the outlet of the T-die film molding machine were measured.

When the resin pressure was 0.5 to 4.5 MPa, the film was determined to have good moldability, and when the resin pressure was 1.0 to 4.0 MPa, the film was determined to have particularly excellent moldability. Within the above range, the production speed of film molding could be increased and the occurrence of resin leakage from the molding machine could be prevented.

### 2. Tensile Test

After the unstretched polyamide film a was stored for one day at 23°C and 50% RH, in the same environment, according to JIS K 7127, the tensile strength at break, tensile elongation at break and modulus of elasticity in the MD and TD directions were measured under conditions of a tensile speed of 300 mm/min. When the tensile strength at break was 80 MPa or more in either the MD or TD direction, the film was determined to have excellent tensile strength. When the tensile elongation at break was 500% or more in either the MD or TD direction, the film was determined to have excellent elongation. When the modulus of elasticity was 700 MPa or less in either the MD or TD direction, the film was determined to have excellent flexibility.

### 3. Haze (Haze Ratio)

The haze (haze ratio) of the unstretched polyamide film a was measured using a Haze Meter (commercially available from Nippon Denshoku Industries Co., Ltd.) according to ASTM D-1003. When the haze ratio was 25% or less, there was no practical issue, when the haze ratio was 15% or less, the film was determined to have excellent transparency, and when the haze ratio was 10% or less, the film was determined to have particularly excellent transparency.

### 4. Glossiness (Gloss Value)

The glossiness (gloss value) of the unstretched polyamide film a was measured according to ASTM D-523 using a digital variable-angle gloss meter (commercially available from Suga Test Instruments Co., Ltd.). When the gloss value was 50% or more, there was no practical issue, when the gloss value was 80% or more, the film was determined to have excellent gloss, and when the gloss value was 100% or more, the film was determined to have particularly excellent gloss.

### 5. Puncture Test

After the unstretched polyamide film a was stored for one day at 23°C and 50% RH, in the same environment, according to JAS (P-1019), the elongation at break and the maximum load were measured using a needle with a diameter of 1.0 φ and a tip shape of 0.5R. When the maximum load was 6.0 N or more, there was no practical issue, and when the maximum load was 8.0 N or more, the film was determined to have particularly excellent puncture strength.

### 6. Coefficient of Friction

After the unstretched polyamide film a was stored for one day at 23°C and 50% RH, in the same environment, according to ASTM D-1894, the coefficient of static friction and the coefficient of dynamic friction were each measured five times, and their average values were determined. Here, Comparative Example 3 could not be measured due to an excessively high coefficient of friction. The acceptance criteria for the coefficient of static friction and the coefficient of dynamic friction were set to 1.0 or less.

### 7. Film Gel

The unstretched polyamide films b obtained in Examples 1 to 5 and Comparative Examples 1 to 5 were cut to A4 size, and the number of film gels generated was visually counted, and determined based on the following criteria.
⊚: Fewer than 20 generated gels observed visually
∘: 20 to 50 generated gels observed visually
×: More than 50 generated gels observed visually

### 8. Pinhole Resistance in Low-Temperature Environment

The unstretched polyamide films b obtained in Examples 1 to 5 and Comparative Examples 1 to 5 were subjected to a bending test for 1,000 cycles at 5°C using a gelbo flex tester with a thermostatic chamber (commercially available from Tester Sangyo Co., Ltd.) according to MIL-B-131C. After the bending test, the film was placed on a recording paper, an Indian ink was then applied and allowed to penetrate to the recording paper, and the number of black spots recorded was measured. The pinhole resistance was determined based on the following criteria.
⊚: The number of black spots was 70 or less/0.03 m²
∘: The number of black spots was more than 70 to 110/0.03 m²
×: The number of black spots was more than 110/0.03 m²

### 8. Recyclability

Using the pellet mixtures obtained in Examples 1 to 5 and Comparative Examples 1 to 5, a 100 µm-thick laminate film including three layers, laminated in the order of a 20 µm-thick polyamide resin composition layer, a 10 µm-thick adhesive layer, and a 70 µm-thick polyethylene layer was obtained using a three-type and three-layer coextrusion air-cooled multi-layer inflation molding machine (die diameter 100 mmφ, commercially available from Dr. Collin). The adhesive layer was made of ADMER (registered trademark) LF128 (acid-modified polyolefin resin, commercially available from Mitsui Chemicals Inc.), and the polyethylene layer was made of F022NH (low-density polyethylene resin, commercially available from Ube-Maruzen Polyethylene Co., Ltd.). The obtained laminate film was cut into flakes. Next, 20 mass% of the flakes was added to 80 mass% of F022NH (low-density polyethylene resin, commercially available from Ube-Maruzen Polyethylene Co., Ltd.), and the mixture was melt-kneaded using a twin-screw kneader ZSK32McPlus (commercially available from Coperion GmbH, a screw diameter of 32 mm) at a cylinder temperature of 210°C, a screw rotation speed of 500 rpm, and a discharge amount of 75 kg/h in the twin-screw kneader to obtain recycled strands. The discharge stability, transparency and surface roughness condition of the strands were visually checked, and the recyclability was determined based on the following criteria. Poor recyclability caused problems such as unstable strand discharge, lack of transparency, and rough surface.
⊚: Strand discharge was stable, the transparency was good, there was no surface roughness, and the recyclability was excellent.
∘: Strand discharge was stable, and although slight cloudiness was observed, the transparency was maintained. In addition, the surfaces of the strands exhibited slight roughness, and the recyclability was acceptable.
×: At least one of the following conditions was satisfied and the recyclability was considered poor. The strand discharge was unstable, the strands were cloudy, there was no transparency, and the strands had rough surfaces.

Table 2 shows the evaluation results of various films of Examples 1 to 5 and Comparative Examples 1 to 5. In Table 2, "not measurable" means that measurement was not possible.

### [Table 2]

**Table 2**

| Measurement item | | | | Unit | Example1 | Example2 | Example3 | Example4 | Example5 | Comparative Example1 | Comparative Example2 | Comparative Example3 | Comparative Example4 | Comparative Example5 |
|---|---|---|---|---|---|---|---|---|---|---|---|---|---|---|
| Unstretched film a Film thickness 50 µ m | | | | | | | | | | | | | | |
| | Resin pressure during film molding | | | MPa | 3.3 | 3.7 | 3.7 | 3.5 | 4.2 | 2.4 | 4.1 | 3.9 | 4.0 | 2.5 |
| | Resin temperature during film molding | | | °C | 258.6 | 259.7 | 259.3 | 259.4 | 259.5 | 258.7 | 259.0 | 259.4 | 259.5 | 260.0 |
| | Tensile strength at break | | MD | MPa | 106.7 | 114.8 | 108.8 | 106.7 | 110.9 | 99.9 | 106.4 | 118.8 | 100.0 | 104.0 |
| | | | TD | | 116.7 | 114.4 | 102.0 | 64.2 | 105.9 | 96.5 | 94.3 | 111.4 | 104.0 | 100.0 |
| | Tensile elongation at break | | MD | % | 530.8 | 548.0 | 538.6 | 533.0 | 541.7 | 564.7 | 529.3 | 551.9 | 538.0 | 495.0 |
| | | | TD | | 580.2 | 584.0 | 562.7 | 458.5 | 577.4 | 573.1 | 559.2 | 572.7 | 569.0 | 492.0 |
| | Modulus of elasticity | | MD | MPa | 616.4 | 574.7 | 593.8 | 556.2 | 615.5 | 748.9 | 670.2 | 673.3 | 625.0 | 942.0 |
| | | | TD | | 627.7 | 602.1 | 624.9 | 603.2 | 641.0 | 720.6 | 702.0 | 632.6 | 632.0 | 945.0 |
| | Haze | | | % | 4.7 | 6.8 | 6.7 | 11.0 | 20.5 | 15.9 | 45.7 | 0.2 | 39.0 | 4.5 |
| | Gloss | | | % | 113.9 | 97.4 | 112.1 | 102.5 | 55.4 | 68.1 | 23.0 | 153.0 | 30.0 | 119.0 |
| | Puncture test | Elongation at break | | mm | 8.6 | 9.0 | 9.0 | 8.4 | 8.2 | 7.3 | 7.7 | 9.5 | 6.5 | 6.4 |
| | | Maximum load | | N | 9.6 | 10.2 | 9.9 | 8.6 | 6.8 | 6.1 | 6.7 | 8.3 | 7.9 | 7.2 |
| | Coefficient of static friction | | | - | 0.5 | 0.5 | 0.5 | 0.5 | 0.5 | 0.3 | 0.3 | Not measurable | 0.4 | 0.8 |
| | Coefficient of dynamic friction | | | - | 0.5 | 0.5 | 0.4 | 0.4 | 0.4 | 0.3 | 0.3 | Not measurable | 0.4 | 0.8 |

| Unstretched film b Film thickness 30 *µ* m | | | | | | | | | | | | | | |
|---|---|---|---|---|---|---|---|---|---|---|---|---|---|---|
| | Film gel | | | - | ⊚ | ⊚ | ⊚ | ⊚ | ○ | × | × | ⊚ | × | ⊚ |
| | Pinhole resistance in low-temperature environment(5°C) | | | spots/0.03 m² | 107 | 101 | 64 | 53 | 50 | 59 | 45 | 163 | 65 | 131 |
| Recyclability | | | | | ⊚ | ⊚ | ⊚ | ⊚ | ○ | × | × | × | × | × |

Based on Table 2, it can be understood that the compositions of Examples 1 to 5 provided films having no appereance deterioration due to film gels and exhibiting excellent transparency, gloss, mechanical strength, coefficient of frcition and pinhole resistance, and exhibited excellent material recyclability. In addition, compositions of Examples 1 to 5 contained 1 to 5 mass% of the functional group-containing copolymer (B) of ethylene and an α-olefin having 3 to 8 carbon atoms, and the DSC curve of the compositions had a melting peak in a range of 150°C to 205°C. Therefore, when waste of the laminate film including at least a polyamide film layer containing the composition and a polyolefin layer was subjected to material recycling, excessive heating was not required, and it was possible to reduce deterioration of physical properties such as coloration and thermal degradation of the polyolefin contained in the waste.

Comparing Examples 2 to 4, the compositions of Examples 3 and 4, which contained the polyolefin (D) having no functional group in addition to the aliphatic polyamide resin (A) and the copolymer (B), exhibited better low-temperature pinhole resistance.

In Examples 1, 2 and 5, the pellet mixture including the first pellet containing the first aliphatic polyamide resin (a1) and the copolymer (B) at a predetermined ratio; and the second pellet containing the second aliphatic polyamide resin (a2) was melt-kneaded to produce a film. In Examples 3 and 4, the pellet mixture including the third pellet containing the polyolefin (D) having no functional group in addition to the first and second pellets was melt-kneaded to produce a film. When the pellet mixture was used in this manner, the components could be uniformly mixed, not only reducing the occurrence of film gels, but also achieving low resin pressure during film molding and excellent moldability.

Comparative Examples 1, 2 and 4 in which the content of the functional group-containing copolymer (B) of ethylene and an α-olefin having 3 to 8 carbon atoms was more than 5 mass% exhibited a high number of film gels generated and poor material recyclability. In addition, Comparative Examples 2 and 4 exhibited poor film transparency and gloss. In Comparative Example 3 in which the resin component was only an aliphatic copolymer polyamide, the film had a high coefficient of friction, and poor pinhole resistance in a low-temperature environment and material recyclability. In Comparative Example 5 in which the content of the functional group-containing copolymer (B) of ethylene and an α-olefin having 3 to 8 carbon atoms was 1 to 5 mass%, but the aliphatic polyamide resin contained only an aliphatic homopolyamide, the film had poor elongation, flexibility, pinhole resistance in a low-temperature environment, and material recyclability.

### Industrial Applicability

The film obtained from the polyamide resin composition of the present invention is particularly suitably used for food packaging, etc., and is useful because it has excellent material recyclability for waste of the film.

## Claims

1. A polyamide resin composition comprising 88 to 99 mass% of an aliphatic polyamide resin (A), 1 to 5 mass% of a functional group-containing copolymer (B) of ethylene and an α-olefin having 3 to 8 carbon atoms, and 0 to 9 mass% of other components (C) based on 100 mass% of the polyamide resin composition,
wherein, in the aliphatic polyamide resin (A), a ratio of the number of methylene groups to the number of amide groups is 3 or more and 11 or less,
the aliphatic polyamide resin (A) comprises 1 to 50 mass% of an aliphatic homopolyamide (A-1) and 50 to 99 mass% of an aliphatic copolymer polyamide (A-2) based on 100 mass% of the aliphatic polyamide resin (A),
when the polyamide resin composition is heated from 0°C to 280°C at a rate of 20°C/min in an air atmosphere, a DSC curve has a melting peak in a range of 150°C to 205°C, and
a number average molecular weight Mn of the polyamide resin composition measured by GPC is 50,000 to 60,000.

2. The polyamide resin composition according to claim 1, wherein the DSC curve further has a melting peak in a range of 70°C to 120°C.

3. The polyamide resin composition according to claim 1 or 2, wherein the aliphatic copolymer polyamide (A-2) is a copolymer selected from the group consisting of polyamide 6/66, polyamide 6/69, polyamide 6/11, polyamide 6/12, polyamide 6/66/11 and polyamide 6/66/12.

4. The polyamide resin composition according to claim 1 or 2, wherein the copolymer (B) is an ethylene/propylene copolymer, ethylene/1-butene copolymer, ethylene/1-hexene copolymer or ethylene/1-octene copolymer, each of which has a group derived from maleic anhydride.

5. The polyamide resin composition according to claim 1 or 2, wherein the other components (C) comprise a polyolefin (D) having no functional group, and the content of the component (D) based on 100 mass% of the polyamide resin composition is 2 to 8 mass%.

6. The polyamide resin composition according to claim 1 or 2, wherein the other components (C) comprise an antioxidant, and the content of the antioxidant based on 100 mass% of the polyamide resin composition is 0.01 to 1 mass%.

7. The polyamide resin composition according to claim 1 or 2, wherein the other components (C) comprise a compound (E), which is at least one selected from the group consisting of methylenebis(stearamide), ethylenebis(stearamide), butylenebis(stearamide) and hexamethylenebis(stearamide), and the content of the compound (E) based on 100 mass% of the polyamide resin composition is 0.01 to 1 mass%.

8. The polyamide resin composition according to claim 1 or 2, wherein the other components (C) comprise a compound (F), which is at least one selected from the group consisting of terminal-modified polyalkylene glycols, phosphate esters or phosphite esters, higher fatty acid monoesters, higher fatty acids, metal salts of higher fatty acids, higher fatty acid monoamides, N-substituted higher fatty acid monoamides, magnesium silicate and substituted benzylidene sorbitols, and the content of the compound (F) based on 100 mass% of the polyamide resin composition is 0.01 to 1 mass%.

9. The polyamide resin composition according to claim 1 or 2, which is substantially free of silica.

10. A polyamide film comprising the polyamide resin composition according to claim 1 or 2.

11. A laminate film comprising at least three layers, laminated in the order of a layer containing the polyamide resin composition according to claim 1 or 2, an adhesive layer, and a polyolefin layer.

12. A laminate film comprising at least five layers, laminated in the order of an adhesive layer and a polyolefin layer on both sides of a layer containing the polyamide resin composition according to claim 1 or 2.

13. The laminate film according to claim 11, wherein the layer containing the polyamide resin composition is a biaxially stretched layer.

14. The laminate film according to claim 11, which is for food packaging.

15. A pellet mixture comprising a first pellet containing a first aliphatic polyamide resin (a1) and a functional group-containing copolymer (B) of ethylene and an α-olefin having 3 to 8 carbon atoms; and
a second pellet containing a second aliphatic polyamide resin (a2);
wherein the first pellet comprises 60 to 90 mass% of the first aliphatic polyamide resin (a1), 10 to 40 mass% of the copolymer (B), and 0 to 9 mass% of other components (C) based on 100 mass% of the first pellet, and the aliphatic polyamide resin (a1) is an aliphatic homopolyamide,
the second aliphatic polyamide resin (a2) comprises 0 to 20 mass% of an aliphatic homopolyamide and 80 to 100 mass% of an aliphatic copolymer polyamide based on 100 mass% of the aliphatic polyamide resin (a2),
the content of the aliphatic homopolyamide is 1 to 50 mass%, and the content of the aliphatic copolymer polyamide is 50 to 99 mass% based on a total amount of 100 mass% of the first aliphatic polyamide resin (a1) and the second aliphatic polyamide resin (a2),
in the aliphatic polyamide resin (a1) and the aliphatic polyamide resin (a2), a ratio of the number of methylene groups to the number of amide groups is 3 or more and 11 or less, respectively,
a kneaded product obtained after the pellet mixture is melt-kneaded comprises a total amount of 88 to 99 mass% of the first aliphatic polyamide resin (a1) and the second aliphatic polyamide resin (a2), 1 to 5 mass% of the copolymer (B) and 0 to 9 mass% of the other components (C) based on 100 mass% of the kneaded product; when the kneaded product is heated from 0°C to 280°C at a rate of 20°C/min in an air atmosphere, a DSC curve has a melting peak in a range of 150°C to 205°C, and a number average molecular weight Mn of the kneaded product measured by GPC is 50,000 to 60,000.

16. The pellet mixture according to claim 15, wherein a melting point of the copolymer (B) is 70 to 120°C.

17. The pellet mixture according to claim 15 or 16, further comprising a third pellet containing a polyolefin (D) having no functional group, wherein the content of the component (D) based on 100 mass% of the melt-kneaded product is 2 to 8 mass%.

18. The first pellet for use in production of the pellet mixture according to claim 15 or 16, which is mixed with the second pellet.

19. The second pellet for use in production of the pellet mixture according to claim 15 or 16, which is mixed with the first pellet.
